# EUROPEAN PATENT SPECIFICATION

(11) **EP 4 140 277 B1**
(45) Date of publication and mention of the grant of the patent: **03.12.2025**
(21) Application number: 22192648.8
(22) Date of filing: 29.08.2022
(51) Int. Cl.: A01D 34/67, A01D 34/82

(54) **LAND MAINTENANCE DEVICE**
BODENPFLEGEGERÄT
DISPOSITIF D'ENTRETIEN DES SOLS

(30) Priority: 31.08.2021 IT 202100022628
(43) Date of publication of application: 01.03.2023
(73) Proprietor: Stiga S.p.A. in breve anche St. S.p.A., 31033 Castelfranco Veneto (TV) (IT)
(72) Inventor: FIOR, Roberto, 31033 Castelfranco Veneto (TV) (IT); PANDIN, Enrico, 31020 Villorba (TV) (IT); D'AGOSTINI, Mauro, 35018 San Martino di Lupari (PD) (IT); MARTONE, Dario, 35138 Padova (PD) (IT); BACCHIN, Gian Luca, 31033 Castelfranco Veneto (TV) (IT); NIRO, Adriano, 31100 Treviso (TV) (IT); CAMERON, James, 31100 Treviso (TV) (IT)
(74) Representative: PGA S.p.A.

(56) References cited:
- EP-A1- 3 498 073
- EP-A2- 1 902 608
- AU-B2- 462 048
- DE-C1- 4 428 373
- US-A1- 2014 290 006

## Description

### FIELD OF THE INVENTION

The present invention relates to a mobile device for land maintenance, for example gardens, turfgrasses or agricultural land. In particular, the mobile device can be a lawnmower having a work tool, for example the cutting blade.

The present invention further relates to a land maintenance method by means of said mobile device.

### BACKGROUND ART

The use of mobile devices, such as lawnmowers, soil tillers, soil aerators or the like, manually driven or self-driving, configured to perform their functions to fully cover the work area are known in the gardening field, and generally in the field related to land maintenance.

During the work steps, some portions of the work area, for example the peripheral zones, border zones or some particular zones centrally located in the work area, can be particularly difficult to effectively reach, due to the presence of obstacles, for example hedges, flower beds, trees, or the like. Due to the presence of such obstacles, the mobile device can have difficulty reaching certain zones of the work area, resulting in lower work quality with respect to zones of the work area which are easier to access.

In the specific case in which the mobile device is moved manually, the operator can encounter difficulties in moving the mobile device in the peripheral and border zones due to the presence of the obstacles indicated above.

Moreover, the very dimensions of the mobile device, in height and/or in width, can interfere with the aforementioned obstacles, for example with a peripheral hedge, thus preventing a correct processing of the peripheral or border zones.

Furthermore, the mobile device's drive handle adjustment systems belonging to the prior art, e.g., the height adjustment, tend to wear quickly, especially if used extensively: once the adjustment system is worn, the handle tends to "fall", being in fact unusable for guiding and governing the mobile device. DE8709285U1 discloses a lawnmower constrained on rails, the frame of which can move transversely in the space between the rails. US5,771,672 describes a lawnmower in which the cutting plate can move laterally to the right and left with respect to the frame. EP3738424A1 describes a lawnmower comprising a mechanism for coupling the cutting plate to the frame which allows a displacement of the cutting plate in a transverse direction. DE102004057043A1 and EP1791415A1 describe a lawnmower comprising two sub-assemblies mutually rotatable about a vertical axis, the first sub-assembly belonging to the handlebar and the cutting tool, the second sub-assembly belonging to a pair of wheels. EP3466237A1 describes a lawnmower with a handlebar assembly, the handlebar assembly comprising a coupling component and a grasping segment which is rotatable with respect to the coupling component. AU462048B2 describes a lawnmower with a grasping assembly, the grasping assembly comprising a lower portion fixed to the frame and an upper portion rotatable so as to be movable laterally to the advancement direction of the lawnmower. US2011/0302893A1 discloses a lawnmower comprising a handle rotatably connected to the frame and an inclination adjustment device interposed between the handle and the frame. DE4428373C1 describes a lawnmower the handlebar of which can rotate with respect to the frame and can be locked according to different inclinations. EP3498073A1 describes a lawnmower the handlebar of which is connected to the frame by a joint, the joint comprising a handle fastening body, a pair of arms fastened to the frame, and selective locking means of the body with respect to the arms. US2014/0290006A1 discloses a lawnmower with a handlebar height adjustment mechanism, the adjustment mechanism comprising a pair of toothed disc elements and an interconnecting disc element. EP1902608A2 describes a lawnmower with a handlebar assembly comprising a lower structural element and an upper structural element which can be rotated with respect to the lower structural element.

### OBJECT OF THE INVENTION

Therefore, the object of the present invention is to solve at least one of the drawbacks and/or limitations of the currently-known mobile devices for land maintenance.

A first objective of the present invention is to provide a resistant drive handle capable of withstanding repeated adjustment cycles in height and along the lateral direction.

This objective is achieved with a manually-driven mobile device in accordance with claim 1. Further preferred embodiments are defined by the dependent claims.

Another objective is to facilitate the land maintenance operations at a peripheral or border zone of the work area.

A further objective is to make the land maintenance operations more effective at a peripheral or border zone of the work area.

A further objective is to allow the mobile device to reach peripheral or border zones of the work area which cannot be reached with the common mobile devices.

A further objective is to facilitate the land maintenance operations for an operator responsible for driving and moving the present mobile device.

These and other objects, which will appear more clearly from the following description, are substantially achieved by a mobile device for land maintenance in accordance with one or more of the appended claims and/or the following aspects.

### BRIEF DESCRIPTION OF THE DRAWINGS

Some embodiments and aspects of the invention will be described hereinafter with reference to the accompanying drawings, given merely for illustrative, nonlimiting purposes in which:
- Figure 1 is a perspective view of a manually-driven mobile device;
- Figures 2 to 5 show different embodiments of a manually-driven mobile device;
- Figures 6 and 7 are perspective views of a drive handle of a manually-driven mobile device;
- Figures 8A, 8B and 9 are front and schematic views of a manually-driven mobile device during an operating condition;
- Figure 10 is a top view of a self-driving mobile device;
- Figure 11 is a top view of a self-driving or manually driven mobile device;
- Figures 12 and 13 are views from the top and from the perspective of a drive handle of a mobile device in accordance with the present invention, respectively;
- Figures 14A and 14B are top and perspective views, respectively, of a laterally displaced drive handle of a mobile device in accordance with the present invention;
- Figure 15 is a side view of a drive handle in a raised and lowered position accordance with the present invention;
- Figure 16 is an exploded view of a drive handle of a mobile device in accordance with the present invention;
- Figure 17 is a view from above of a drive handle of the mobile device in accordance with the present invention;
- Figure 17A is a sectional view of figure 17 in a closed condition of the joint closing system;
- Figure 17B is a sectional view of figure 17 in an opening condition of the joint closing system;
- Figures 18 and 19 show the drive handle in accordance with the present invention in a folded position;
- Figure 20 is a perspective view of a regulating insert of a joint of the drive handle in accordance with the present invention;
- Figure 20A is a sectional view of the regulating insert shown in figure 20;
- Figure 21 shows a further embodiment of the drive handle in accordance with the present invention;
- Figure 22 is a view from below of a mobile device having a cutting blade;
- Figure 23 is a view from below of a mobile device having two cutting blades;
- Figure 24 is an exploded view of an actuation system of a mobile device;
- Figure 25 is a sectional view of figure 24 according to a plane passing through the rotation axis B of the joint.

### DEFINITIONS AND CONVENTIONS

It should be noted that in the present detailed description, corresponding parts illustrated in the various figures are indicated with the same numerical references. The figures could illustrate the object of the invention through non-scale depictions; therefore, the parts and components illustrated in the figures related to the object of the invention could exclusively relate to schematic depictions.

### Control unit

The control unit can be a single unit or be formed by a plurality of different control units depending on the design choices and operational needs.

The term control unit means an electronic type component which can comprise at least one of: a digital CPU, an analogue type circuit, or a combination of one or more digital processors with one or more analogue type circuits. The control unit can be "configured" or "programmed" to carry out certain steps: in practice, this can be accomplished by any means which allow the control unit to be configured or programmed. For example, in the case of a control unit comprising one or more CPUs and one or more memories, one or more programs can be stored in appropriate memory banks connected to the CPU(s); the program(s) contains instructions which, when executed by the CPU(s), program or configure the control unit to carry out the operations described in relation to the control unit. Alternatively, if the control unit is or comprises analogue circuitry, then the circuitry of the control unit can be designed to include circuitry configured, in use, to process electrical signals so as to carry out the steps related to the control unit.

### Actuator

The term actuator means any device capable of causing a movement on a body, for example upon a command of the control unit, a command sent by the control unit received by the actuator. The actuator can be electrical, pneumatic, mechanical such as spring, hydraulic, or other type.

### Obstacle

The term obstacle refers to any body or element capable of limiting, reducing or obstructing the path of the mobile device within the work area. The obstacle can be a hedge, a flowerbed, the peripheral border of the work area, an inner border of the work area, a boulder, a tree, a plant or the like. This obstacle can further comprise a safety limit, for example if the obstacle is defined by a ditch, a gully or a step. In other words, the obstacle can actively hinder the path of the mobile device, or define a limit not to be exceeded for safety reasons.

### DETAILED DESCRIPTION

### Mobile device

The present disclosure relates to a mobile device 1 configured to move and carry out maintenance operations within a work area of land, such as turfgrass, a garden or agricultural land, having an extension between 10 and 10000 square meters, in particular between 500 and 3000 square meters: the maintenance operations can comprise, for example, cutting turfgrass. In particular, the mobile device 1 can be, for example, a lawnmower as shown in the accompanying drawings. Alternatively, the mobile device 1 can be a motor hoe, a tiller, an aerator or the like.

The mobile device 1 is a manually-driven device.

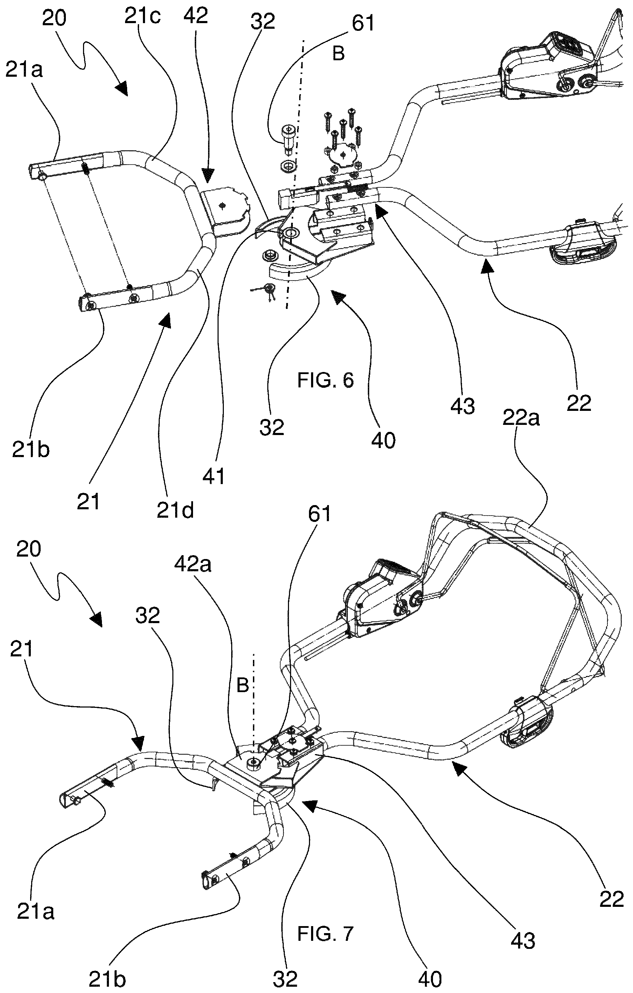

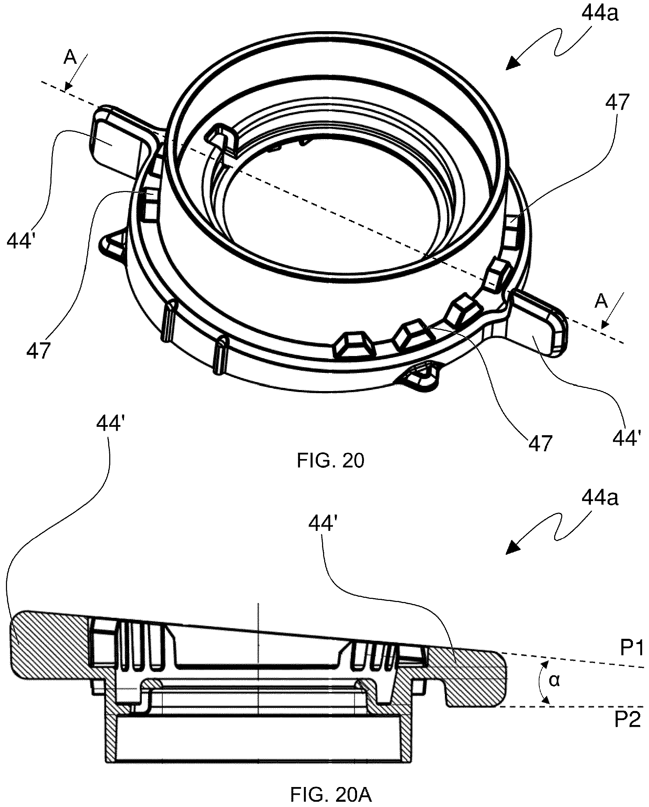

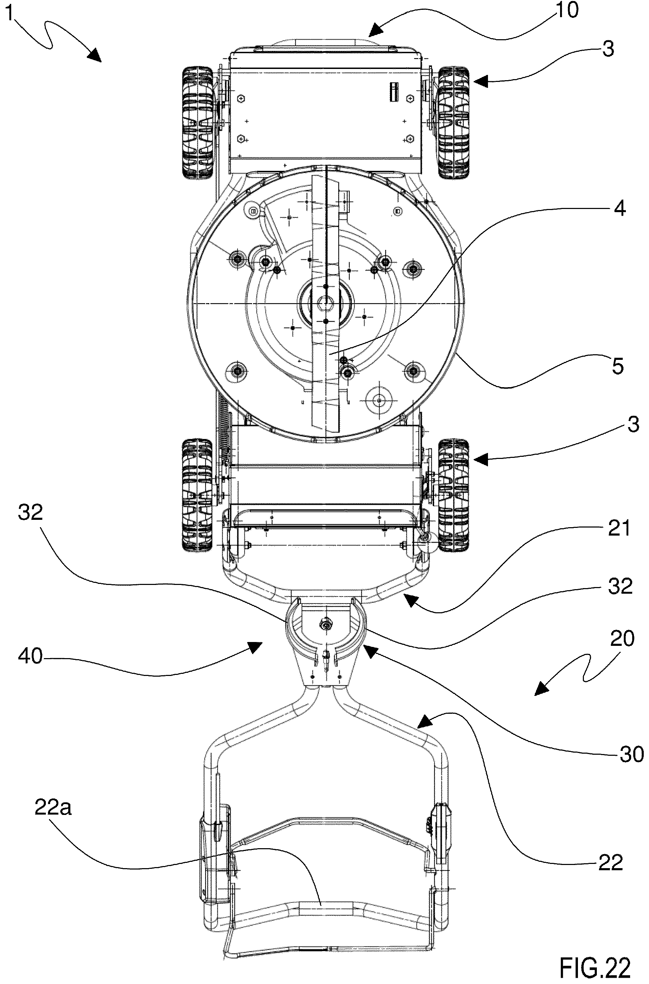

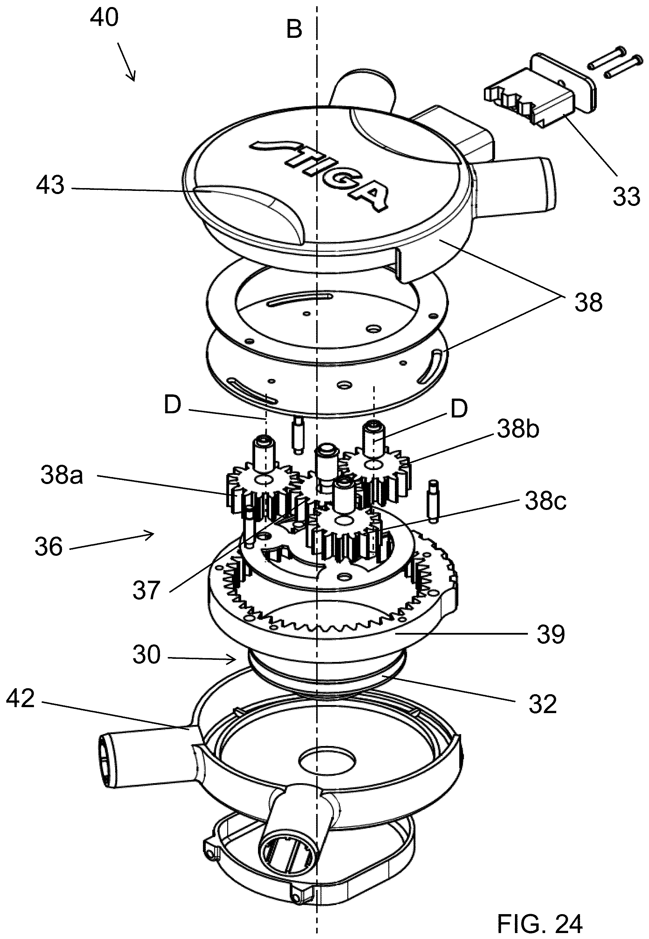

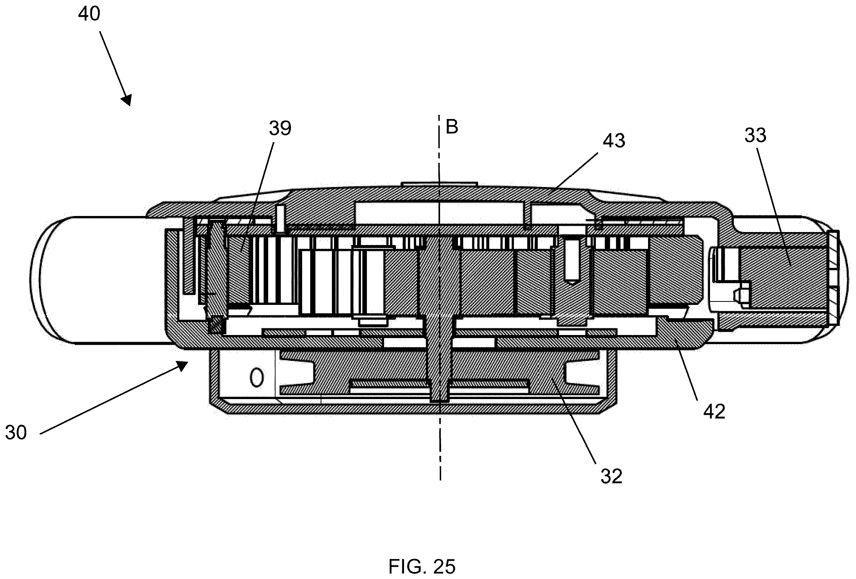

It is pointed out that, since the invention as claimed in appended claims applies to manually-driven mobile devices, disclosed embodiments which relate to self-driving mobile devices only should be regarded as examples not being part of the invention as claimed in the appended claims. As regards disclosed embodiments which relate to manually-driven mobile devices, it is pointed out that some figures (including at least Figure 6, Figure 7, Figure 12, Figure 13, Figure 14A, Figure 14B, Figure 15, Figure 16, Figure 17, Figure 17A, Figure 17B, Figure 18, Figure 19, Figure 20, Figure 20A, Figure 21, Figure 22, Figure 23) show aspects of the present invention which are related to claimed subject-matter, whilst further figures show aspects of the present invention which can be anyway consistent with the claimed subject-matter (e.g. the actuation system for a drive handle shown in Figure 24 and in Figure 25).If it is manually driven, the mobile device 1 is driven by a user: in this case the mobile device 1 can comprise driving movement means 3, for example one or more traction wheels, adapted to determine the advancement of the mobile device 1: alternatively the mobile device 1 can be configured to be pushed by a user. If the mobile device 1 is manually driven and comprises driving movement means 3, the mobile device 1 can be a tractor comprising a driving station to accommodate the user on board, the latter being adapted to drive the tractor within the work area. Alternatively, if the mobile device 1 is manually driven and does not comprise driving movement means 3, for example idle wheels, the mobile device 1 comprises a drive handle to allow the operator to move and guide the mobile device within the work area: in such a case, the mobile device has dimensions and mass consistent with the need, on the part of the user, to have to move it by pushing within the work area. In a further embodiment, the manually-driven mobile device 1 comprises driving movement means 3 adapted to determine, or contribute to, the movement of the mobile device, and a drive handle configured to be grasped by a user to allow the driving thereof within the work area.

The movement means 3 can comprise one or more electric motors operatively connected to a control unit 50 and to at least one drive wheel of the mobile device 1 to determine the advancement movement thereof. The electric motor of the movement means 3 preferably has a nominal power between 1000 W and 2000 W, in particular between 1300 W and 1500 W if it is a pushed lawnmower or between 1500 W and 2000 W if it is a tractor with driving station for an operator. Alternatively, the mobile device 1 can comprise a combustion engine, for example an Otto or Diesel cycle engine, operatively connected to the movement means 3 to determine the movement of the mobile device 1.

The manually-driven mobile device 1, comprising the drive handle and not comprising an on-board driving station, preferably has a length between 40 cm and 70 cm, and a width between 30 cm and 60 cm. Alternatively, a manually-driven mobile device 1, in particular the tractor comprising an on-board driving station, preferably has a width between 65 cm and 125 cm.

Alternatively, if the mobile device 1 is self-driving, the mobile device 1 comprises the movement means 3 described above and is further configured to move and drive autonomously within the work area 1 by using one or more sensors, so as to orient itself and to avoid obstacles, as per the prior art. For example, the self-driving mobile device 1 can comprise one or more proximity sensors and/or one or more position sensors configured to send signals to a control unit 50 configured to command the driving movement means 3 to guide the mobile device 1 within the work area to carry out the maintenance activities.

The self-driving mobile device 1 preferably has a width between 30 cm and 125 cm.

The on-board battery of the mobile device 1 can be a rechargeable battery having a charging capacity between 2.5 Wh and 40 Wh. The battery can be configured to deliver a voltage preferably between 26 Volts for self-driving robots and 48 Volts for tractors. In more detail, the battery can be configured to deliver a current, during a standard operating condition, between 2 Amps and 5 Amps for self-driving robots, and between 5 Amps and 60 Amps for tractors. The battery can be a rechargeable battery via a power outlet of a home network, for example a 110V, 200V or 380V power source.

The mobile device 1 can carry a control unit 50 on board, in particular a first controller, configured to carry out one or more commands in accordance with the present invention. It should be noted that in the present description, when referring to a "*control unit 50*", the latter can be arranged on board the mobile device 1, or can be carried by a remote device, such as, for example, a PC, a server, a tablet or a smartphone, distinct and separate from the mobile device 1.

The mobile device 1 of the present invention, whether manually driven or self driving, comprises at least one work tool 4, for example one or two rotary blades, configured to carry out the maintenance operations in the work area: an electric motor 80 or combustion engine, optionally the same motor as the movement means 3, is configured to activate the work tool 4. A control unit 50 can be connected to the electric motor of the work tool 4 and configured to command the activation thereof. The mobile device 1 provided with the rotary blade can thus be a lawnmower. Similarly, if the mobile device is a lawnmower, the operating body is a cutting plate defining a protection volume carrying the cutting blade. In particular, the cutting plate has a bell-like shape in which the internal volume faces the ground in an operating condition.

In an embodiment, the mobile device 1 comprises a single electric motor 80 or combustion engine, operatively connected to the work tool 4 and to the movement means 3 so as to make such movement means 3 driving. Alternatively, the mobile device 1 can comprise an electric motor or combustion engine, connected to the work tool 4, and a further electric motor or combustion engine, operatively connected to the driving movement means 3.

In a further embodiment, the mobile device 1 is an electrically powered device, in which the movement means 3 and the work tool 4 are driven by one or more electric motors powered by an on-board battery.

The work tool 4 preferably comprises a cutting blade for cutting turfgrass, rotating about an axis A: alternatively, the work tool 4 can comprise an aerator configured to perform a plurality of holes in the ground, or a tiller or a motor hoe.

It should thus be noted that the present invention is not related solely to a lawnmower, but can be used in association with other devices in the field of gardening and land maintenance, such as aerators and motor hoes.

The mobile device 1 of the present invention comprises a support frame 2 carrying the movement means 3, whether driven or idle, one or more work tools configured to perform the maintenance operations within the work area and an operating body 5 carrying and/or hosting the work tool 4 and defining an actuation region of the mobile device 1 configured to perform the maintenance operations. In detail, the movement means 3 can comprise wheels, in particular four wheels or tracks. The wheels can be arranged at the respective four vertices of the support frame 2, to define a rectangular or square polygonal shape.

The mobile device 1 comprises a front portion 10, a rear portion 11 opposite to, and distanced from, the front portion 10, a left side 12 interposed as a connection between the front portion 10 and the rear portion 11 of the mobile device 1, and a right side 13 interposed as a connection between the front portion 10 and the rear portion 11 of the mobile device 1: the right side 13 is opposite and distanced from the left side 12.

The words "*right*" and "*left*" are a convention which can be arbitrarily defined according to a front or rear view of the mobile device 1, as long as such a convention is maintained unchanged during the reading of such a description, of the claims and of the attached aspects.

The left side 12 and the right side 13 can comprise the movement means 3, in particular wheels or movement tracks: for example, the left side 12 and the right side 13 of the mobile device 1 can each comprise two movement wheels placed at the front portion 10 and the other at the rear portion 11. In other words, the mobile device 1 can have a front wheel axle 3a placed at the front portion 10 and comprising a left front wheel 3a' and a right front wheel 3a", and a rear wheel axle 3b placed at the rear portion 11 and comprising a left rear wheel 3b' and a right rear wheel 3b".

An envelope of the four wheels, in particular an envelope defined by the left and right front wheels and the left and right rear wheels, defines a peripheral shape 7 of the mobile device 1.

The mobile device 1 extends in length between the front portion 10 and the rear portion 11, to define a longitudinal axis X of the mobile device 1: in particular, the longitudinal axis X of the mobile device 1 crosses the front portion 10 and the rear portion 11 substantially orthogonally. In more detail, the longitudinal axis X of the mobile device 1 can define an axis of symmetry between the left side 12 and the right side 13 of the mobile device 1 and pass through a central portion of the mobile device 1 itself. Similarly, a straight advancement of the mobile device 1 can be coincident with the longitudinal axis X of the mobile device 1. Furthermore, the longitudinal axis X can be substantially orthogonal to the front and/or rear wheel axis of the mobile device 1 at least during a straight motion condition. Furthermore, the longitudinal axis X can be equidistant from the left and right wheels of the same axis: in such a case, the longitudinal axis defines a central longitudinal axis of the mobile device. In particular, the longitudinal axis X, in the present description, is considered centrally placed to the mobile device.

The movement means 3 define a support plane SP for the mobile device 1: in fact, such a support plane SP coincides with the ground during an operating condition of the mobile device 1. In greater detail, the support plane is passing through the points of contact between the wheels of the mobile device 1 and the ground on which the mobile device 1 is arranged. It should be noted that the rotary blade of the work tool 4 is movable about a rotation axis A which is transverse or substantially orthogonal to the support plane SP.

The movement means 3 can further define a straight advancement of the mobile device 1 along a longitudinal advancement direction substantially coincident with the longitudinal axis X of the mobile device 1: in particular, the longitudinal advancement direction is substantially orthogonal to a rotation axis of the wheels of the mobile device 1. Such a longitudinal advancement direction is substantially parallel to the support plane SP: likewise the longitudinal axis X is parallel to the support plane SP.

The mobile device 1 further extends in height along a vertical axis Z orthogonal to the longitudinal axis X and to the support plane SP defined by the movement means 3. In other words, the longitudinal axis X is orthogonal, when the mobile device 1 is resting on the ground on the movement means 3 thereof, to the ground itself. The operating body 5 can be movable in height along the vertical axis Z between a distal position and a near position with respect to the support plane SP: in particular, during an operating condition, the operating body 5 can be movable in height along the vertical axis Z between a distal position and a near position with respect to the ground, to allow a variable cutting height. A variation along the vertical axis Z of the operating body 5 determines a simultaneous variation in height of the work tool 4, and consequently a variation in the distance between the work tool 4 and the ground and/or support plane.

Similarly, the mobile device 1 extends in width along a transverse axis W between a left side 12, interposed as a connection between the front portion 10 and the rear portion 11 of the mobile device 1, and a right side 13, also interposed as a connection between the front portion 10 and the rear portion 11 of the mobile device 1: the right side 13 is opposite and distanced with respect to said left side 12. In particular, the transverse axis W is orthogonal to the longitudinal axis X and to the vertical axis Z.

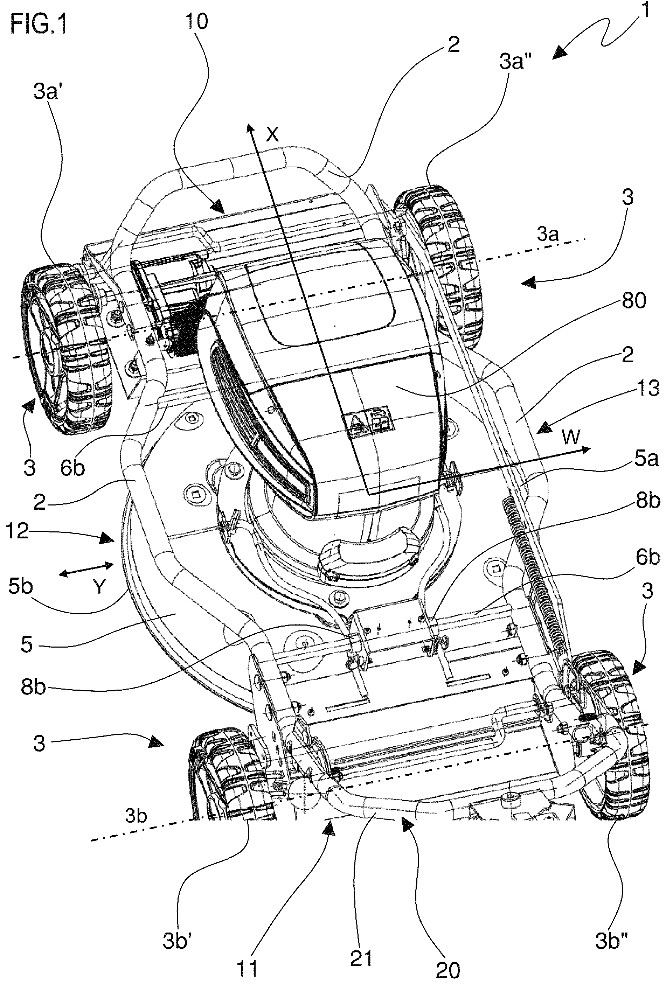

In other words, the longitudinal axis X, the transverse axis W, and the vertical axis Z define a reference system of the mobile device 1, as shown in figure 1. The origin of said reference system can be the mass or geometric centre of gravity of the mobile device.

In accordance with such a reference system, the rotation axis A of the rotary blade is substantially parallel or coincident with the vertical axis Z of the mobile device 1.

An axis of the front and/or rear wheels is parallel to the transverse axis W and optionally substantially parallel to the support plane SP.

The mobile device 1, in the case of a manually-driven mobile device 1 as shown in figures 1-5, can comprise a drive handle 20 substantially constrained at the rear portion 11 of the mobile device 1 and configured to allow an operator to drive and optionally move, for example push, the mobile device 1 within the work area. The drive handle 20 can be made of metallic material, for example steel, iron or aluminium, or plastic or composite material. The drive handle 20 preferably extends along an inclined direction transverse to the operating body 5, in particular transverse to the support plane SP. The drive handle 20 defines in particular an angle with the support plane SP between 20° and 70°, more in particular between 30° and 50°. As shown in figures 1 to 5, the handle extends at the rear of the mobile device 1 substantially from the rear portion 11 between a first end, connected at the rear portion 11 of the mobile device 1, and a second end configured to allow gripping by an operator: in particular the drive handle 20, being inclined with respect to the support plane, defines a horizontal projection on the support plane, in other words on the ground, and a vertical projection on the vertical axis of the mobile device 1. The horizontal projection extends from the rear portion 11 of the mobile device 1 along and towards a direction away from the rear portion 11 of the mobile device 1.

In accordance with any of the embodiments described and claimed, the handle can be directly constrained to the operating body 5 of the mobile device 1 or to the support frame 2. In particular, the handle can be constrained at a first and a second hooking point to the mobile device 1, for example at a left hooking point and a right hooking point.

The drive handle 20 defines a tool which the operator uses to push and/or guide the mobile device 1 within the work area.

In addition, the operator can, by means of the handle, lift at least part of the mobile device 1: for example, by lowering the handle and leveraging the rear wheels of the mobile device 1, the operator can lift the front wheels of the mobile device 1 and the operating body 5. Further details and embodiments of the handle are described in the disclosure below.

The operating body 5 defines a cover of the work tool 4, in particular of the rotary blade: the operating body 5 covers the rotary blade at least laterally and above, while the operating body 5 is open below to allow contact between the grass and the rotary blade. In accordance with an embodiment, the operating body 5 has a circular or semicircular shape: alternatively, the operating body 5 can have a polygonal shape, for example rectangular or square. In particular, the operating body 5 comprises a disc-like upper portion carrying the motor and the relative work tool 4, for example the rotary blade: the operating body 5 further comprises a side wall emerging transversely from the upper portion, in particular from a peripheral zone of the upper portion. The operating body 5 thus has a bell-like shape defining an internal volume housing the work tool 4.

The operating body 5 can be made of metallic material, for example steel or aluminium, or plastic or composite material. It should be noted that the operating body is rigidly constrained to the work tool and to the relative motor: consequently, any movement of the operating plane forcibly determines a similar movement of the work tool and the relative motor. In other words, the operating body and the work tool are integral with each other: the only degree of freedom of the work tool with respect to the operating plane is the rotational one about the rotation axis A.

The mobile device 1 further comprises a discharge conduit 14 configured to convey the cut grass, during an operating condition, towards a rear or side portion of the mobile device 1 in particular, said discharge conduit 14 extends between a first end facing an outlet of the operating body 5, and a second end adapted to discharge the cut grass and optionally to be constrained to a storage box of the cut grass.

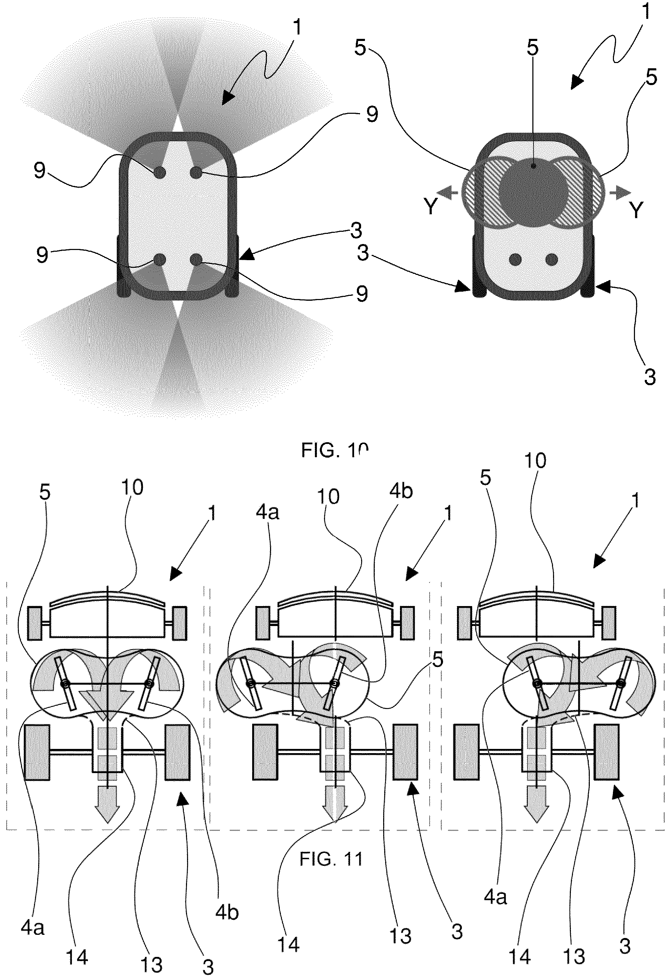

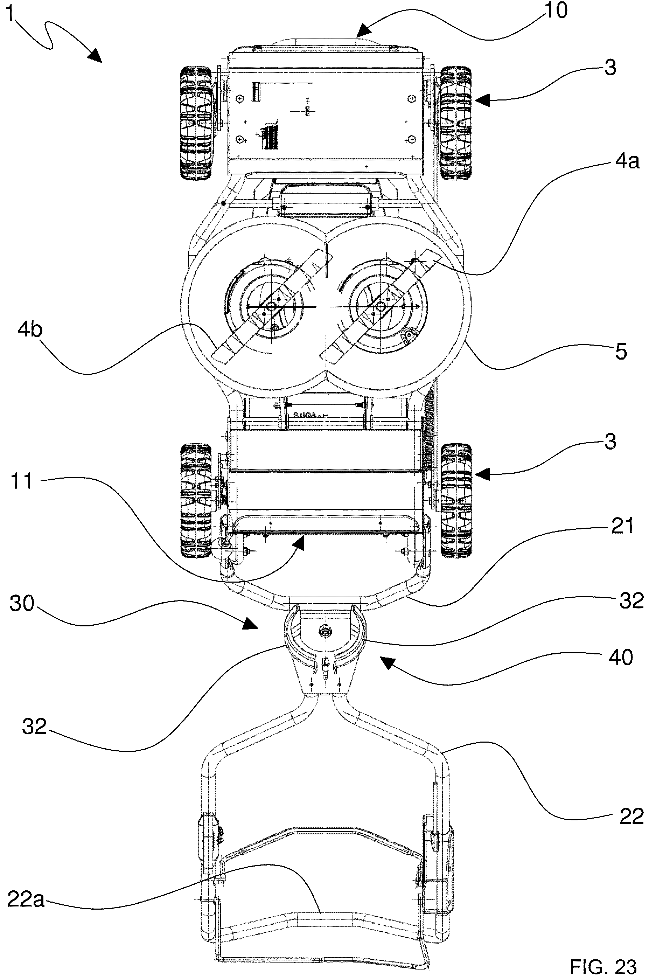

In an embodiment schematically shown in figure 11 and from below in figure 23, the work tool 4 of the mobile device 1 comprises a first rotary blade 4a movable by rotation about a rotation axis A and a second rotary blade 4b movable by rotation about an auxiliary rotation axis A'. The first and the second rotary blade 4b are both carried by the same operating body 5 and arranged side by side: in particular the rotation axis A is substantially parallel and distanced with respect to the auxiliary rotation axis A'. It should be noted that the rotation axis A and the auxiliary rotation axis A' can be substantially orthogonal to the support plane defined by the movement means 3.

The first and the second blade can have the same diameter, or alternatively, can have different diameters, for example in which the first rotary blade 4a has a smaller diameter with respect to the second rotary blade 4b.

The first and the second blade are preferably counter-rotating, so as to direct the cut grass towards the discharge conduit: the term counter-rotating indicates that if the first blade rotates clockwise, the second blade rotates counter-clockwise and vice versa.

In accordance with the embodiment comprising two rotary blades, the operating body 5 can have an elongated shape to entirely cover the two rotary blades: in particular the operating body 5 can have an elongated and circular shape at the lateral ends thereof as in figure 11.

In accordance with the embodiment comprising two rotary blades, the mobile device 1 further comprises a flexible conduit 13 extending between a first end constrained to a central portion of the operating body 5, and a second end constrained to an inlet of the discharge conduit. The flexible conduit is thus interposed between the discharge conduit 14 and the operating body 5 and is configured to allow the passage of the cut grass towards the discharge conduit both when the operating body 5 is arranged in the left lateral position and when it is arranged in the right lateral position. The flexible conduit can be bellows-shaped and made of fabric material, alternatively of plastic material.

### LATERALLY MOVABLE DRIVE HANDLE

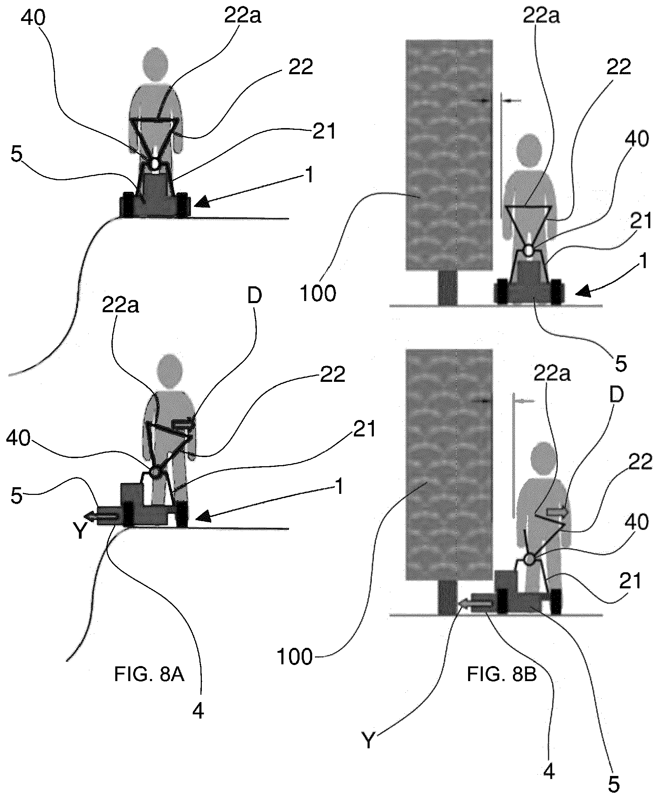

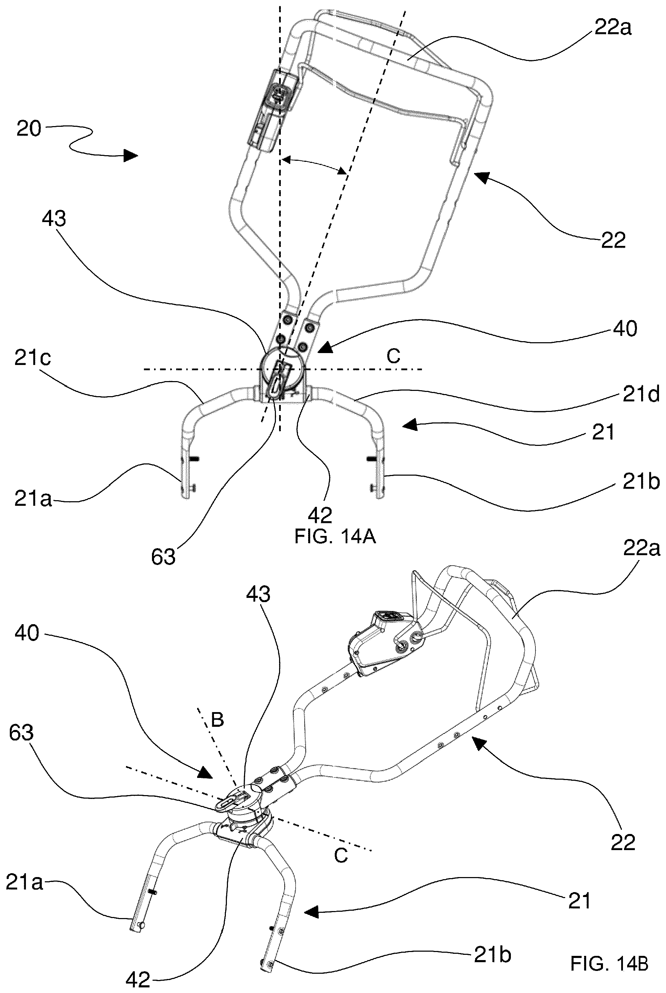

In an embodiment, the manually-driven mobile device 1 comprises the drive handle 20 emerging at the rear of the mobile device 1 and a coupling member, connected to the drive handle 20, configured to allow the movement of at least part of the drive handle 20 along a control axis D, as shown in figures 8A and 8B, and figures 14A and 14B in accordance with a further embodiment. It should be noted that the control axis D comprises at least one translational component substantially parallel with the transverse axis W: this means that the movement of the drive handle 20 can occur further along a vertical axis, or occur by rotation, while still comprising a movement component parallel with the transverse axis W.

The lateral movement of the drive handle allows an operator to avoid any obstacles along the path in the work area. For example, if the mobile device 1 were to operate near a hedge, the operator can laterally move the drive handle 20 away from the hedge and simultaneously keep the mobile device 1 against the hedge itself. In other words, such an embodiment allows to move the driving position of the operator to easily reach zones of the work area which are difficult to access, without at the same time compromising the ability to control driving the mobile device 1.

In particular, the coupling member is configured to allow the positioning, along the control axis D, of the drive handle 20 in:
- a right lateral position, in which the drive handle 20 emerges at least in part laterally to the right with respect to the peripheral shape 7,
- a left lateral position, in which the drive handle 20 emerges at least in part laterally to the left with respect to the peripheral shape 7,
- a central position interposed between the right lateral position and the left lateral position.

The right lateral position and the left lateral position of the drive handle 20 define the maximum movement end limits of the drive handle 20 along the control axis D. In particular, the drive handle 20, when arranged in the left lateral position and/or in the right lateral position, exceeds the lateral dimension limits defined by the movement means 3 of the mobile device 1. The maximum translation value of the drive handle along the control axis D useful for the movement of the operating body 5 is between 5 cm and 50 cm with respect to the central position.

In an embodiment not shown in the accompanying drawings, the coupling member comprises a rail configured to move the drive handle for translation along the control axis D: in particular said translation being a movement of the handle along a straight trajectory and substantially orthogonal to the longitudinal axis X of the mobile device and optionally parallel to the translation axis Y of the operating body 5.

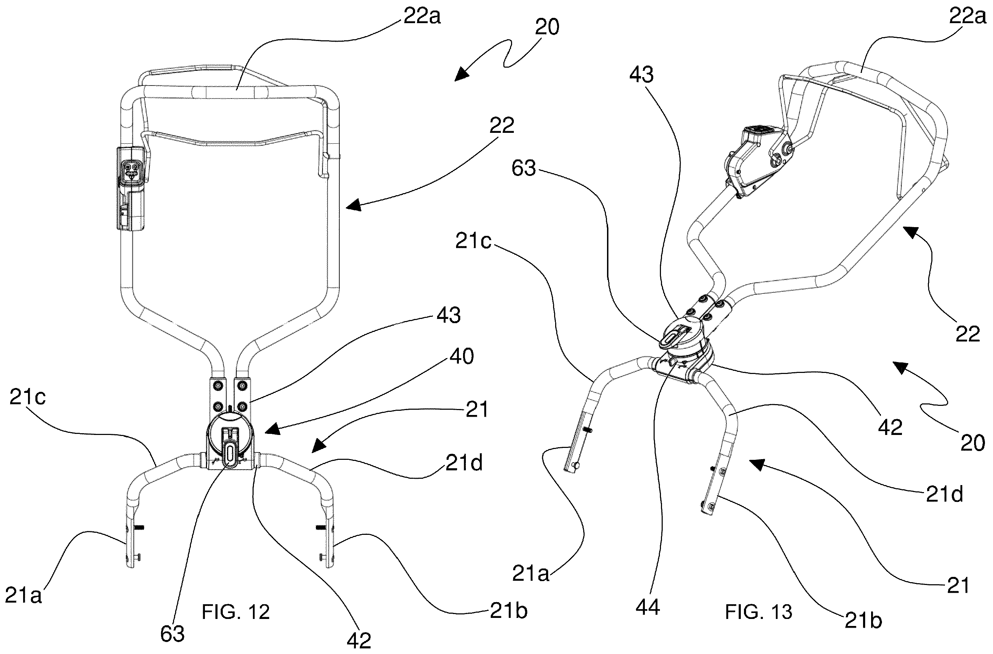

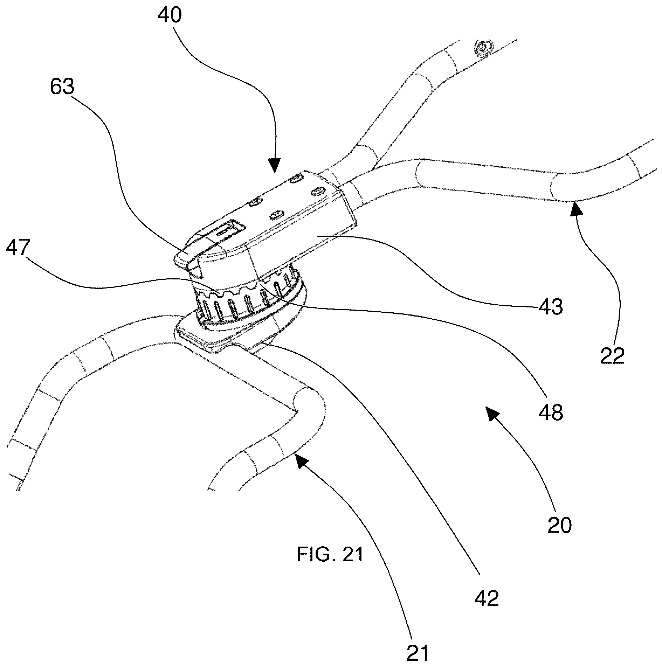

The coupling member comprises a joint 40. The drive handle 20 and the relative joint 40 are shown in detail in figures 6 and 7 in accordance with an embodiment, in figures 12-19 in accordance with a further embodiment, and in figure 21 in accordance with a further alternative embodiment: the three embodiments substantially differ for the architecture of the joint 40. It should be noted that each of the embodiments allow the movement of the drive handle 20 along the control axis D, and consequently each of the embodiments contribute to obtaining the same advantages described above related to the movement of the handle along the axis D.

The drive handle 20 comprises a first member 21 extending for a first length between a first end, constrained to a rear portion 11 of the mobile device 1, and a second end carrying or comprising at least a first coupling element 42 of the joint 40. The drive handle 20 further comprises a second member 22, movable and distinct with respect to the first member 21 of the drive handle 20, extending for a second length between a first end comprising or carrying a second coupling element 43 of the joint 40 removably constrained to the second end of the first member 21 of the drive handle 20, and a second end comprising a gripping portion 22a configured to be grasped by an operator while driving the mobile device 1.

In more detail, the first member 21 of the drive handle 20 comprises a first coupling portion 21a configured to constrain at the rear to the mobile device 1 and laterally towards the right side 13 of the mobile device 1, and a second coupling portion 21b configured to constrain at the rear to the mobile device 1 and laterally towards the left side 12 of the mobile device 1: the second coupling portion 21b is distinct and distanced along the transverse axis W from the first coupling portion 21a. The first member 21 further comprises a first section 21c extending between the first coupling portion 21a and the joint 40, and a second section 21d extending between the second coupling portion 21b and the joint 40. In other words, the first and the second section 21c, 21d of the first member 21 of the drive handle 20 converge centrally in the joint 40: it should be noted that the drive handle comprises one and only one joint 40 constraining the first member 21 to the second member 22 of the drive handle 20.

The first and second section 21d are joined together to define a first member 21 of the drive handle 20 in a single body: this single body comprises the first coupling portion 21a, the first section 21c, the second section 21d and the second coupling portion 21b: in particular the first member 21 has an arcuate "U" shape, with a concavity facing the rear portion 11 of the mobile device 1. The first member 21 of the handle can be made of metallic material, for example from a metallic tubular suitably bent to define the inverted "U" shape. Alternatively, the first member 21 can be made of plastic or composite material.

The second member 22 of the handle extends laterally and in height from the joint 40 to define the gripping portion 22a of the drive handle 20.

The drive handle 20, comprising the first and the second member 21, 22, can define a □ shape (Latin, gamma) or X shape. In general, the drive handle 20 centrally has a narrowing with respect to the coupling portions to the movable device 1 and with respect to the gripping portion 22a, in which the joint 40 is arranged at such central narrowing.

In particular, the joint 40 is centrally interposed between the first and the second coupling portion 21b of the drive handle 20 along the transverse axis W, in particular according to a view from the rear of the mobile device 1. In particular, according to a front view with respect to a plane ZW, passing through the vertical axis Z and the transverse axis W, the joint 40 is centrally interposed between the movement means 3 and aligned along a central axis of the mobile device 1.

Further, the joint 40 can be arranged in an intermediate zone, in terms of distances, between the coupling portions of the first member 21 and the gripping portion 22a of the second member 22: in particular, the joint 40 can be substantially equidistant between the coupling portions of the first member 21 and the gripping portion 22a of the second member 22, with a maximum difference between the two distances between 20% and 30%. In other words, defined as total length L of the handle, the joint 40 is substantially arranged at half of such length L, with a maximum difference between the length of the first member 21 and the length of the second member 22 between 20% and 30%.

The joint 40 comprises a fulcrum 41 defining a rotation axis B, whereby the handle is configured to rotate about the rotation axis B along a rotation plane orthogonal to the rotation axis B and transverse to the support plane SP of the mobile device 1. Such rotation determines the movement of the drive handle 20 along the control axis D towards the left side 12 and/or towards the right side 13 of the mobile device 1: in other words, a component of the rotary movement of the handle is oriented along the control axis D. The rotation plane is inclined with respect to the support plane SP by an angle between 30° and 70°, as shown in perspective view in the accompanying drawings 1-4.

Such a fulcrum 41 comprises the first coupling element 42 firmly constrained to the first member 21 of the drive handle 20 and comprising a through hole, the second coupling element 43 firmly constrained to the second member 22 of the drive handle 20 and comprising a through hole, and a through pin 61 passing through the through hole of the first and second coupling element 43 and extending along the rotation axis B of the joint 40. Such an architecture defines a first member 21 of the drive handle 20 fixed and constrained to the mobile device 1, while the second member 22 of the drive handle 20 has at least one rotational degree of freedom about such a fulcrum 41 defining the rotation axis B, allowing the lateral movement of the second member 22 along the control axis D.

In particular the rotation axis B of the joint 40 is transverse to the support plane SP, and substantially parallel to, or lying on, a plane XZ passing through the longitudinal axis X and the vertical axis Z. Furthermore, the rotation axis B intersects a central axis of the mobile device 1 aligned with the longitudinal axis X. Furthermore, the rotation axis B is inclined, with respect to the longitudinal axis X along such a plane XZ, by an angle between 30° and 70°. Such an embodiment is shown in figure 21.

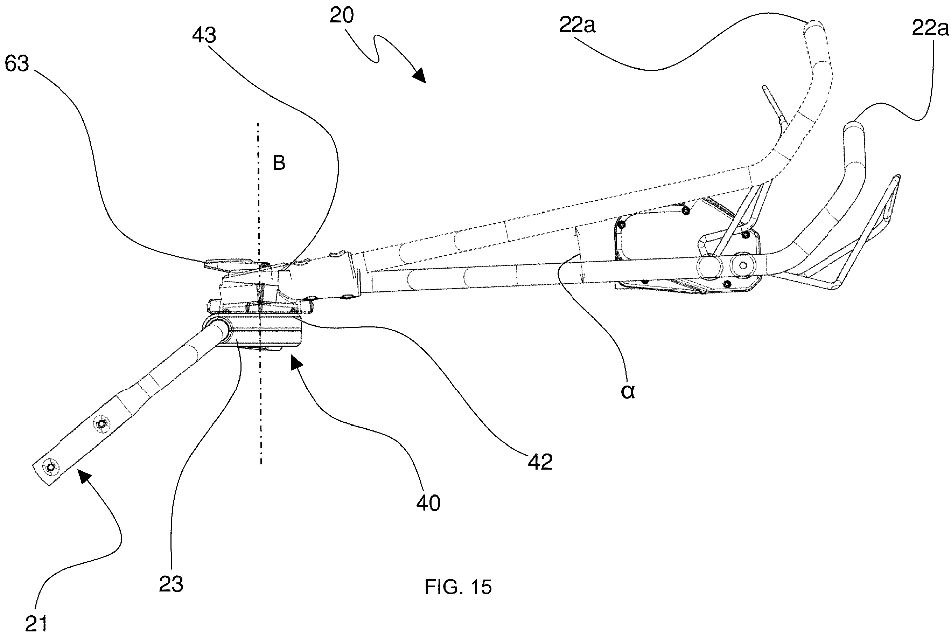

Figures 12-19 show a further embodiment in which the joint 40 is further configured to vary a height H of the gripping portion 22a of the drive handle 20 with respect to the support plane SP, as schematically shown in figure 15: such a height is defined in particular by the distance interposed between the gripping portion 22a of the handle and the support plane SP. In accordance with such an embodiment, the first member 21 of the handle is fixed and constrained at the rear of the mobile device 1, while the second member 22 is movable in height.

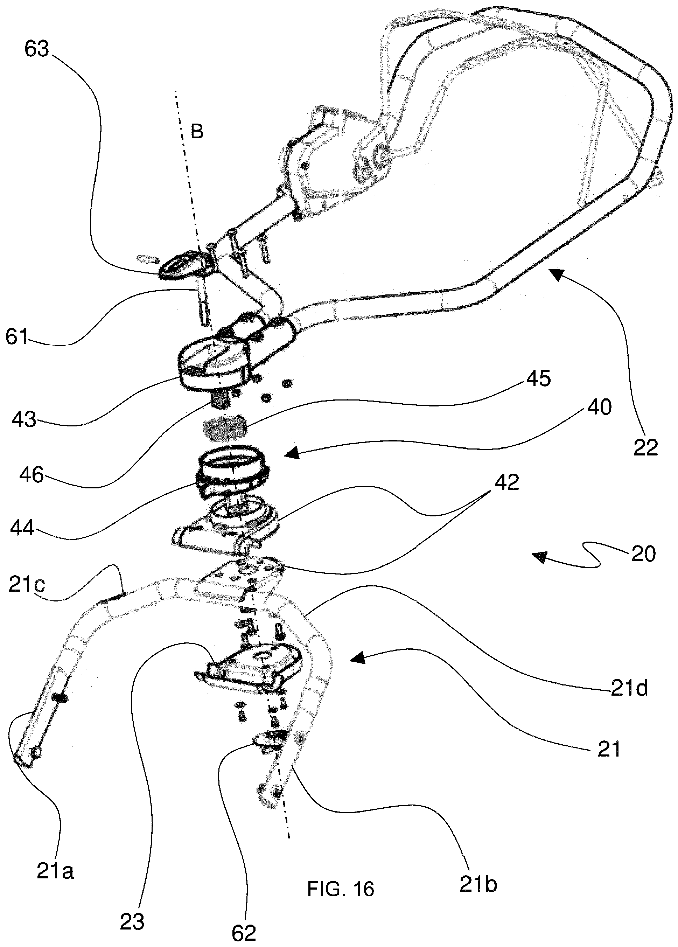

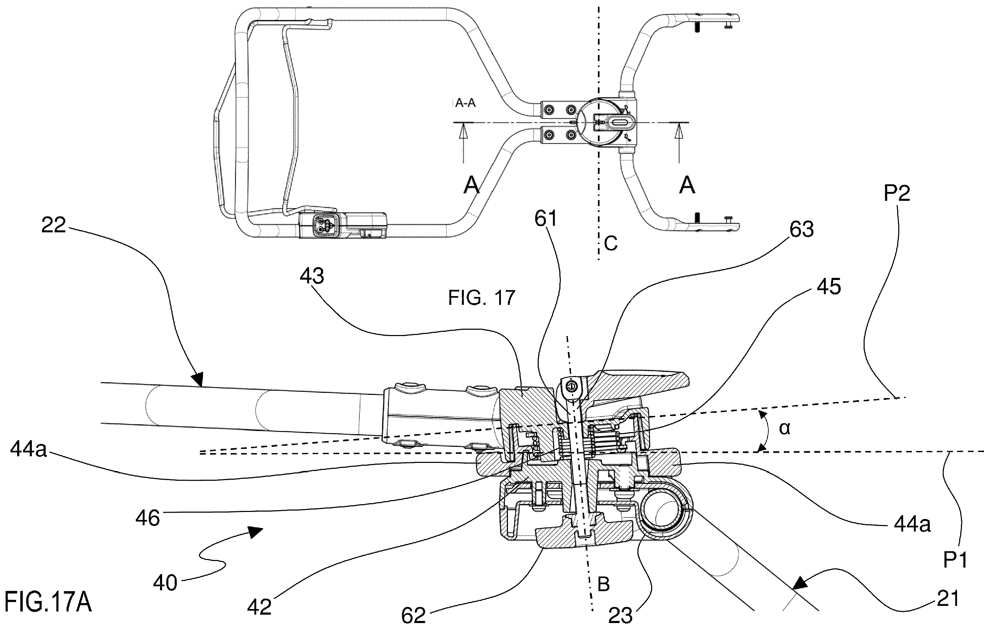

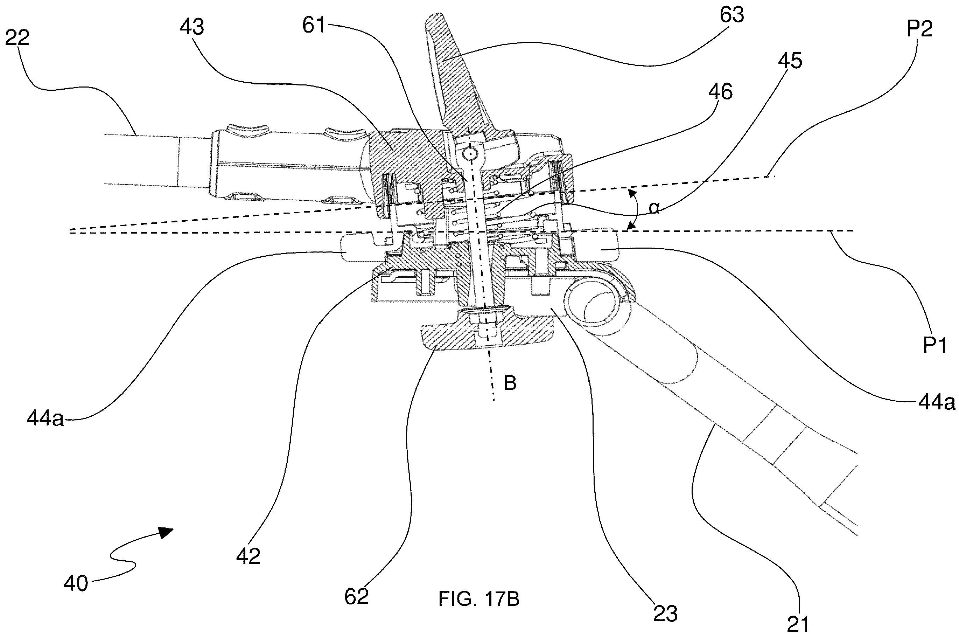

In this regard, the joint 40 comprises a regulating insert 44 having a wedge shape in cross-section, as highlighted in figures 16 and 17B. The regulating insert 44 is interposed between the first coupling element 42 and the second coupling element 43 of the joint 40 and is movable in rotation about the rotation axis B with respect to the first and/or second coupling element 43 of the joint 40. A rotation of the regulating insert 44 of the joint 40 with respect to the first and/or the second coupling element 43 determines a contextual variation in height of the gripping portion 22a of the drive handle 20 with respect to the support plane SP as in figure 15.

The regulating insert 44 radially extends substantially about the rotation axis B of the joint 40 and extends in thickness between a first abutment plane, configured to contact the first coupling element 42 of the drive handle 20 and a second abutment plane, configured to contact the second coupling element 43 of the drive handle 20: the first and the second abutment plane are inclined relative to each other at an angle α between 4° and 20°, in particular between 6° and 15°, more in particular between 8° and 12°, preferably equal to 10°. In particular the first and the second abutment plane of the regulating insert 44 are orthogonal to the vertical axis Z, in particular in which the first and the second abutment plane of the regulating insert 44 are both orthogonal to a plane XZ passing through the longitudinal axis X and the vertical axis Z.

The first and second abutment plane of the regulating insert 44 thus determine a relative inclination between the first coupling element 42 and the second coupling element 43 and further determine the inclination of the rotation axis B of the joint 40 with respect to the support plane SP: such an inclination, as already specified, is projected on the plane XZ.

The regulating insert 44 is rotatable about the rotation axis B: a rotation of the regulating insert 44 with respect to the first and/or the second coupling element 43 of the joint 40 determines a contextual variation of the inclination of the rotation axis B of the joint 40 with respect to the support plane, and in particular with respect to the first or the second abutment element: such a variation of inclination consequently determines the height variation of the gripping portion 22a of the drive handle 20, as shown in figure 15. In fact, it should be noted that the second member 22, during the variation in height thereof, defines a rotary motion about a virtual axis C: such an axis C is defined as "virtual" because the joint 40 does not have a physical fulcrum aligned along the axis C, but such rotation is determined by the particular wedge shape of the regulating insert rotating about the rotation axis B which is orthogonal to the virtual axis C. The virtual axis C is schematically shown in figure 14B.

In more detail, the regulating insert 44 defines a disc-like regulating plate 44a having a wedge-like section along the plane XZ. Furthermore, the first coupling element 42 also defines a first disc-like plate 42a and has a first abutment plane adapted to contact the first abutment plane of the regulating plate 44a. Similarly, the second coupling element 43 defines a second disc-like plate 43a, and has a second abutment plane adapted to contact the second abutment plane of the regulating plate 44a. Since the first and the second abutment plane of the regulating plate 44a are inclined relative to each other by an angle α, the first abutment plane of the first plate 42a and the second abutment plane of the second plate 43a are also inclined relative to each other by the same angle α. Consequently, a rotation of the regulating insert 44 about the rotation axis B of the joint 40 determines a contextual rotation of the second member 22 of the drive handle 20 about the virtual axis C, schematically shown in figure 14A, 14B, 17A and 17B: the rotation axis B of the joint 40 is transverse, and in particular orthogonal, to the virtual axis C of the second member 22 of the handle. In fact, the rotation of the regulating insert about the rotation axis B determines a contextual variation in height of the gripping portion 22a of the second member 22 of the drive handle 20.

The second member 22 of the actuator handle 20 is positionable at least in:
- a lowered position in which the gripping portion 22a of the drive handle 20 has a first distance H with respect to the support plane SP of the mobile device 1 and in which the regulating insert 44 is positioned in a first angular position; and in
- a raised position in which the gripping portion 22a of the drive handle 20 has a second distance H" with respect to the support plane SP of the mobile device 1: the second distance is greater than the first distance, and the regulating insert 44 is positioned in a second angular position angularly rotated, along the rotation axis B of the joint 40, by 180° with respect to the first angular position.

The inclination of the second member 22 of the drive handle 20 can vary, between the lowered position and the raised position, by an angle between 4° and 20°, in particular between 6° and 15°, more in particular between 8° and 12°, preferably equal to 10°: the consequent variation in height of the handle thus depends on the extension in length of the second member 22 of the handle itself. It should be noted that such an inclination with respect to the support plane SP is measured on a plane XZ passing through the longitudinal axis X and the vertical axis Z of the mobile device 1.

The joint 40 can further comprise a closing system, shown in figures 12 to 21, configured to connect the regulating plate 44a, the first plate 42a and the second plate 43a of the drive handle 20 to each other and to define a locking condition and an adjustment condition of the joint 40.

In particular, in the adjustment condition of the joint 40, the regulating plate 44a is movable by rotation about the rotation axis B to vary the height of the gripping portion 22a of the drive handle 20: furthermore, in the adjustment position the second member 22 of the drive handle is movable by rotation about the same rotation axis B to allow the movement of the gripping portion 22a along the control axis D.

Instead in the locking condition of the joint 40, the relative rotation between the regulating plate 44a and at least one of the first and the second plate 43a of the drive handle 20 is inhibited, so as to lock both the rotation of the second member 22 of the handle about the rotation axis B, and the height adjustment of the handle. In the locking condition, the closing system abuts the regulating plate 44a between the first and the second plate 43a of the joint 40 to prevent a relative rotation between the first plate 42a, the regulating plate 44a, and the second plate 43a.

The closing system comprises a through pin 61 passing transversely in the respective central holes of the joint 40, i.e., through the first plate 42a of the joint 40, the regulating plate 44a, and the second plate 43a of the joint 40. The closing system further comprises a first stop element 62, for example a screwable knob for adjusting a useful length of said through pin 61, engaged at a first end of the through pin 61 and defining an abutment against at least one of the first and the second plate 43a of the joint 40, as shown in the sectional view of figure 17B. The closing system further comprises a second stop element 63, for example a manually operable closing lever, engaged at a second end of the through pin 61 and movable between a closing position and an opening position.

In the closing position, the first plate 42a, the regulating plate 44a and the second plate 43a are forcedly compressively engaged with each other to define an axial constraint along the rotation axis B of the joint 40: the first stop element 62 is in forced abutment against the first or second plate 43a of the joint 40, while a portion of the second stop element 63 is in forced abutment against the other of the first and second plate 43a. The regulating plate 44a is likewise pressed along the rotation axis B of the joint 40 between the first and the second plate 43a: the closing position determines the locking condition of the joint 40.

Instead in the opening position, the through pin 61 allows an axial degree of freedom, substantially along the rotation axis B, to at least one of the first plate 42a, the second plate 43a and the regulating plate 44a, so as to allow a rotational degree of freedom of the regulating plate 44a.

In other words, when the closing system is in the closing position, the central pin 61 crushes therebetween the regulating insert 44, the first coupling element 42 and the second coupling element 43 of the joint 40, to prevent the mutual rotation thereof.

Further, to prevent the mutual rotation between the regulating insert 44 and the first and second coupling element 43, the regulating insert 44 comprises teeth 47 along at least one of the first and the second abutment plane: said teeth 47 comprise a sequence of protrusions and valleys extending in height and depth in a direction substantially parallel to the rotation axis B of the joint 40. Similarly, the first and/or second coupling element 43 also comprise respective teeth 48 configured to cooperate with the teeth 47 of the regulating insert 44 at least in the locking condition of the joint 40. The respective teeth of the regulating insert 44 and of the first and/or second coupling element 43 face each other and are configured to mesh with each other during the locking condition, so as to inhibit rotation. In other words, in such an embodiment the second member 22 of the handle is locked in rotation when the closing system is in the closing position, corresponding to the locking condition of the joint 40. Thus in such an embodiment, when the closing system is in the opening position, the drive handle 20 is free to rotate about the rotation axis B of the joint 40, moving towards the left and towards the right, and furthermore the regulating insert 44 is also free to rotate about the rotation axis B with respect to the first coupling element 42 to further allow a variation in the height of the gripping portion (22a) of the handle. Figures 12 to 19 show such an embodiment in which the handle can be rotated about the rotation axis B, to facilitate the maintenance operations within the work area, and moved in height by means of the regulating insert 44.

In an embodiment shown in figure 21, the joint comprises the first coupling element 42 and the second coupling element 43 facing each other, each comprising respective teeth configured to cooperate with each other so as to inhibit a rotation of the first coupling element 42 with respect to the second coupling element 43: such teeth thus allow to inhibit the rotation of the second member 22 of the drive handle with respect to the first member 21 of the drive handle. The embodiment of figure 21 does not comprise the regulating insert 44: the first and the second coupling element 42, 43 of the joint 40 are thus in contact with each other to allow or inhibit mutual rotation. In such an embodiment, the joint 40 can comprise an auxiliary elastic element 46, for example a compression helical spring, interposed and acting between the first plate 42a and the second plate 43a of the drive handle 20: the auxiliary elastic element 46 is thus configured to exert a repulsive force between the first plate 42a and the second plate 43a of the drive handle 20 so as to decouple the teeth of the first plate 42a and the second plate 43a and consequently allow the rotation, about the rotation axis B of the joint, between the second member 22 and the first member 21.

The joint 40 can further comprise an elastic regulating element 45, for example a helical compression spring, interposed and acting between the regulating plate 44a and at least one of the first and the second plate 43a of the drive handle 20: the elastic regulating element 45 is configured to exert a repulsive force between the regulating plate 44a and said at least one of the first and second plate 43a of the drive handle 20. In the embodiment shown in the sectional view of figure 17B, the elastic regulating element 45 is interposed and acting between the regulating plate 44a and the second plate 43a of the second member 22 of the drive handle 20. When the joint 40 is in the adjustment condition, the elastic element axially distances, along the rotation axis B of the joint 40, the regulating plate 44a from the first and/or the second plate 43a of the drive handle 20: such a distancing allows a rotational degree of freedom of the regulating plate 44a with respect to the first and/or second plate 43a to determine the height adjustment of the drive handle 20. The elastic regulating element 45 is preferably concentric to the rotation axis B of the joint 40.

The elastic regulating element 45, combined with the teeth of the regulating insert 44, allows an operator, when the joint 40 is in the unlocking condition, to rotate the regulating insert 44 at discrete steps defined by the teeth themselves, thereby improving the manoeuvrability of the regulating insert. In other words, the elastic regulating element 45, combined with the teeth of the regulating insert 44, determines a resistant torque on the regulating insert 44 during a rotation thereof about the rotation axis B.

The elastic regulating element 45 and the auxiliary elastic element 46 can be concentric with each other, in which the auxiliary elastic element 46 is radially internal with respect to the elastic regulating element 45.

The drive handle 20 further comprises a constraining portion 23 between the joint 40 and at least one of the first and the second member 21, 22 of the drive handle 20: such a constraining portion determines a fixed coupling between the joint 40 and the first or second member 22 of the drive handle 20. The accompanying figures show an embodiment in which the constraining portion 23 securely connects the first member 21 of the handle to the first coupling element 42 of the joint 40.

In particular it should be noted that, in accordance with the embodiment of the accompanying drawings, the first member 21 of the drive handle 20 and the first coupling element 42 form a single body: in particular, the constraining portion 23 does not allow the rotation between the first member 21 of the handle and the first coupling element 42.

It should further be noted that during a condition of use of the mobile device 1 by an operator, the drive handle 20 is mostly stressed in a travel direction, and along a substantially vertical direction towards the ground: in fact, to lift the front wheels of the mobile device 1, the operator must apply a load on the drive handle 20 along a substantially vertical direction to leverage the rear wheels. Such behaviour is very often carried out by the operator during maintenance operations, thus defining a cyclic load on the handle and defining a torque momentum acting on the joint 40 about the virtual axis C: the fact that the joint 40 of the present drive handle 20 does not have a rotation fulcrum 41 aligned along the virtual axis C, thus determines a considerable advantage in terms of reliability of the joint 40. In addition, even if the locking system were left loose or in the opening position, the handle would not fall to the ground even if subjected to a vertical load applied by the operator. In fact, the presence of the coupling plates 42a, 43a extending and facing each other along a plane transverse to the direction of the applied load, makes it possible to avoid such an applied load cyclically stressing the joint 40 by twisting, but in fact determines a tensile load on the through pin 61 of the closing system.

In other words, the architecture of the joint 40 just described allows a height adjustment of the handle, as well as a rotation thereof towards the left and right, simultaneously improving the fatigue strength of the joint 40 itself.

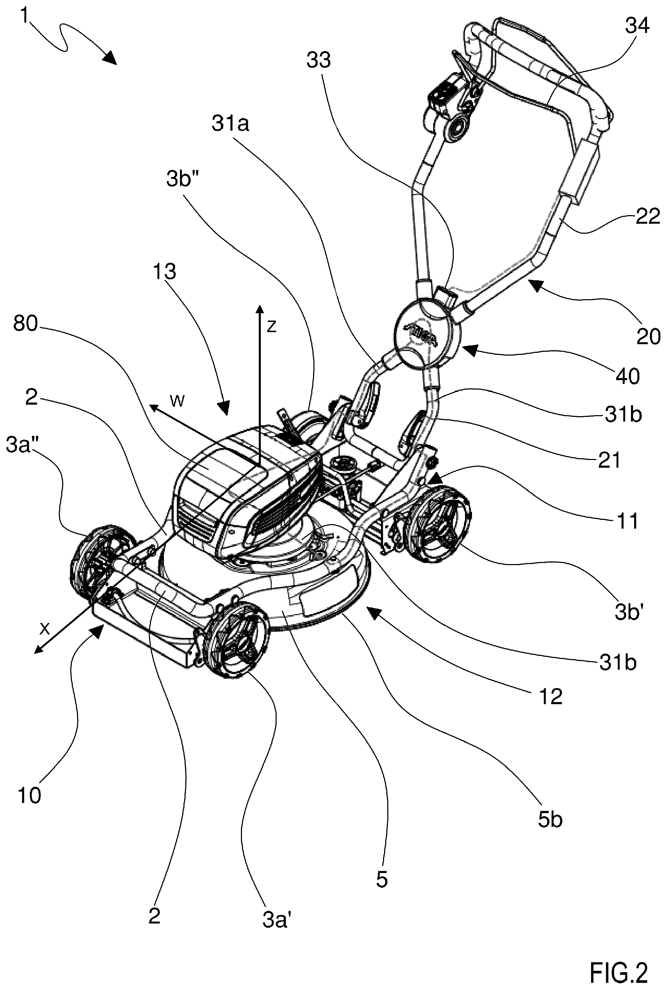

Further, the second member 22 is rotatable, in particular when in the unlocking position, with respect to the first member 21 about the rotation axis B between an operating position and a folded position. In the operating position, the second member 22 is arranged in one of the right lateral position, the left lateral position and the central position, as shown in figures 2-5: in other words, the second member, when arranged in the operating position, is configured to be grasped by an operator to guide the mobile device within the work area. The second member 22, when arranged in the left or right lateral position, is angularly rotated with respect to its central position by an angle between 20° and 60°, in particular between 25° and 45°.

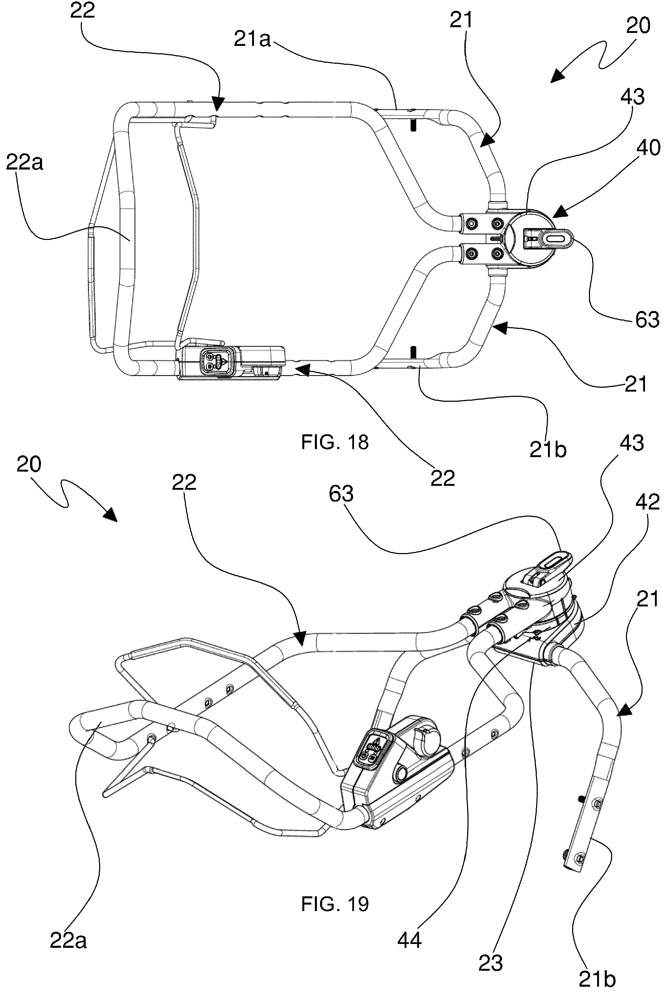

Instead in the folded position, the second member is angularly rotated, with respect to its central position and about the rotation axis B, by an angle between 170° and 190°, in particular equal to 180°, as shown in figures 18 and 19: in other terms the second member 22, with respect to the position in which the handle is configured to allow to guide the mobile device, is rotated up to being arranged above the support frame of the mobile device, i.e., above the mobile device itself and in a position near the mobile device. In particular, in the folded position, the mobile device is interposed, along the vertical axis Z, between the second member 22 of the drive handle 20 and the support plane SP.

The movement between the operating position and the folded position is allowed when the closing system is arranged in its opening position, and/or when the joint is in the adjustment condition and/or when the engagement system is in the unlocking condition.

Summarizing the above, the drive handle 20 is configured for:
- being arranged in the central, left lateral and/or right lateral position by rotating about the rotation axis B to allow an easy guiding of the mobile device to an operator during an operating condition,
- adjusting the height of its gripping portion 22a by rotating, about the rotation axis B, the regulating insert 44,
- being arranged in the folded position by rotating the second member 22 of the handle 20 about the rotation axis B substantially at an angle equal to 180° with respect to its central position so as to reduce the dimensions occupied by the handle.

### MOVABLE OPERATING BODY AND ACTUATION SYSTEM

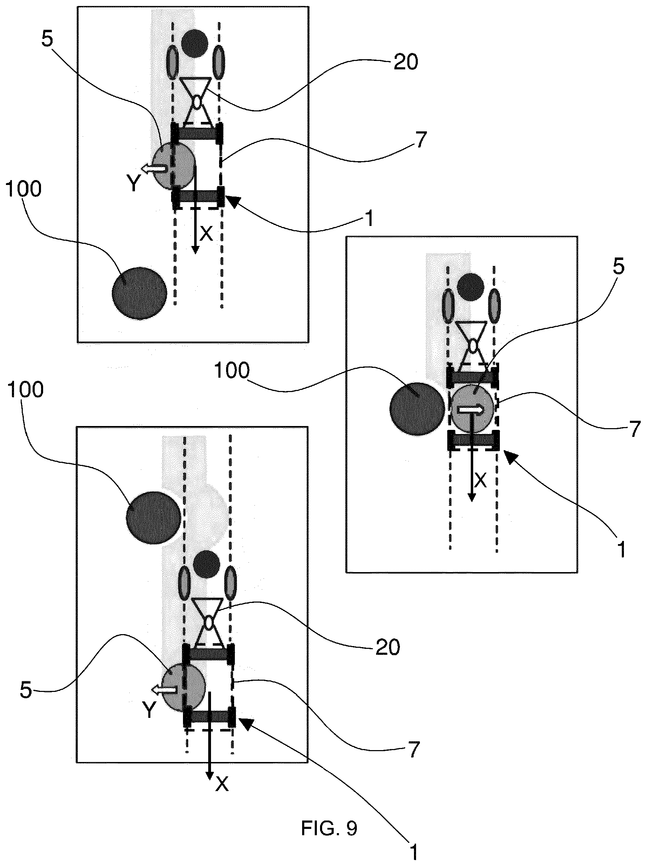

In accordance with an embodiment, the operating body 5 is movable, in particular for translation, along a translation axis Y horizontal to the ground. The translation axis Y is also substantially parallel to the support plane SP and substantially orthogonal to the longitudinal axis X. Furthermore, the translation axis Y can be substantially orthogonal to the vertical axis Z of the mobile device 1. In other words, during an operating condition of the device, such a configuration allows the lateral movement of the operating body 5 as shown in figures 8A, 8B and 9, defining a movement of the operating body 5 towards the left and towards the right. In fact, such lateral movement allows maintenance operations to be carried out in hard-to-reach areas, for example near a slope as in figure 8A or below a hedge as in figure 8B, or to avoid obstacles as shown in figure 9.

It should be further noted that the rotation axis A of the work tool 4 is substantially parallel to the vertical axis of the mobile device 1 and orthogonal to the translation axis Y of the operating body 5.

In particular, the operating body 5 is movable along the translation axis Y between a right lateral position and a left lateral position, in which the left and right lateral position define the maximum end limits within which the operating body 5 is movable along the translation axis. In the right lateral position, a first end portion 5a of the operating body 5 has a maximum distance with respect to the central axis of the mobile device 1, while a second end portion 5b of the operating body 5, opposite the first end portion 5a, has a minimum distance with respect to the central axis. The first and the second end portion 5b are placed along the translation axis Y: optionally the first end portion 5a is symmetrical with respect to the second end portion 5b with respect to the central axis of the mobile device 1. When the operating body 5 is instead in the left lateral position, the first end portion 5a of the operating body 5 has a minimum distance with respect to said central axis, while the second end portion 5b of the operating body 5 has a maximum distance with respect to the central axis. In particular, it should be noted that a line passing through the first and the second end portion 5b of the operating body 5 can be aligned or parallel with the translation axis Y.

The operating body 5 is further positionable in a central position interposed between the left lateral position and the right lateral position: in the central position, the first and the second end portion 5b of the operating body 5 can be equidistant from the central axis of the mobile device 1. In other words, the central position defines a median position of the operating body 5 between the left and right lateral position. A maximum movement value of the operating body 5 along the translation axis **Y,** with respect to the central position, is between 5 cm and 40 cm, and in particular between 10 cm and 30 cm.

In order to allow movement of the operating body 5 along the translation axis **Y,** the device can comprise one or more rails 6 firmly constrained to the support frame 2 and carrying the operating body 5: such rails 6 can be bolted or welded to the support frame 2 and are fixed with respect to the frame. In particular, the rails 6 extend in length parallel to the transverse axis W of the mobile device 1. In particular, the rails 6 have an elongated cylindrical shape.

The mobile device 1 preferably comprises a first and a second rail 6a, 6b parallel to each other and extending in length along a respective direction in length parallel to the translation axis Y: the first and the second rail 6a, 6b extend in length between a respective first end facing the right side 13 of the mobile device 1, and a second end facing the left side 12 of the mobile device 1.

The first rail 6a is preferably arranged substantially at the front portion 10 of the mobile device 1, while the second rail 6b is preferably arranged at the rear portion 11 of the mobile device 1.

It should be noted that the guides support the operating body 5 vertically and prevent the movement thereof along the longitudinal axis X, simultaneously allowing the operating body to move along the translation axis Y.

The mobile device 1 further comprises one or more guides firmly constrained to the operating body 5 to form a single body cooperating with the respective rails 6. In particular, the guides cooperating with the rails 6 to support the operating body 5 vertically and to simultaneously allow the movement thereof along the translation axis Y: the guides are thus movable together with the operating body 5 along the translation axis Y. It should be noted that the guides support the operating body 5 vertically and prevent the movement thereof along the longitudinal axis X.

In particular, the mobile device 1 comprises a first and a second guide 8a, 8b each comprising a respective eyelet having a through opening: the first rail 6a is inserted in the through opening of the eyelet of the first guide, while the second rail 6b is inserted in the through opening of the eyelet of the second guide. The first and the second guide 8a, 8b are thus slidable on the respective first and second rail 6a, 6b, allowing the mobility of the operating body 5 along the translation axis Y.

In particular, the first guide is placed at the front portion 10 of the mobile device 1, while the second guide is placed at the rear portion 11 of the mobile device 1.

The through opening of each eyelet defines a central axis parallel to the translation axis Y: in particular, this central axis of each eyelet is substantially coincident with the extension in length of the rail which passes through it.

The eyelet can be made of metal or plastic. In particular, a bushing of low friction material, for example plastic or polytetrafluoroethylene PTFE, can be interposed between the eyelet and the rail so as to facilitate the relative sliding. Alternatively, a recirculating ball bearing can be interposed between the eyelet and the rail so as to further improve the relative sliding.

The operating body 5 is movable along the translation axis Y manually or automatically.

In the embodiment in which the operating body 5 is movable along the translation axis Y manually, as shown in figures 1 to 5, the mobile device 1 comprises an actuation system 30 connected to the drive handle 20 and configured to control the movement of the operating body 5 along the translation axis Y.

In an embodiment, the actuation system 30 comprises the joint 40 in one of the previously described forms so as to allow the movement of the drive handle 20 along the control axis D. In particular, the movement of the drive handle along the control axis D occurs by rotating the handle about the rotation axis B of the joint 40.

The actuation system 30, connected to the joint 40, is then configured to determine, in response to a displacement of the drive handle 20 along the control axis D, the movement of the operating body 5 along the translation axis Y.

In accordance with a preferred embodiment shown in figure 8A and 8B, a movement of the drive handle 20 along the control axis in a first direction determines a simultaneous movement of the operating body 5 along the translation axis Y in a second direction opposite the first direction and vice versa. In other words, a movement of the drive handle 20 to the left, determines a contextual movement of the operating body 5 to the right: similarly, a movement of the drive handle 20 to the right, determines a contextual movement of the operating body 5 to the left.

The actuation system 30 is a mechanical system which physically connects the drive handle 20 to the operating body 5.

In the embodiment shown in figures 1-4 and 21-22, the joint 40 is configured to allow a rotation of the drive handle 20 about a rotation axis B, to determine the contextual displacement of the operating body along the translation axis Y.

The drive handle 20 lies on a transverse actuation plane with respect to a plane of the operating body 5 and is transverse with respect to the support plane. In the event of a rotation of the drive handle 20, the latter rotates along said actuation plane, such that the rotation axis B of the handle is orthogonal to the actuation plane on which the drive handle 20 lies.

The rotation axis B of the actuation system 30 can be located at a median portion of the drive handle 20 placed between the first and the second end of the handle. In other words, the median portion is interposed between, and optionally substantially equidistant from, the first and the second end of the actuator handle 20. Since the drive handle 20 is inclined, the actuation system 30 is located at a greater distance with respect to the support plane with respect to a similar distance between the first end and the support plane. In particular, the actuation system 30 is positioned at a distance from the support plane between 20 cm and 100 cm, in particular between 25 cm and 60 cm.

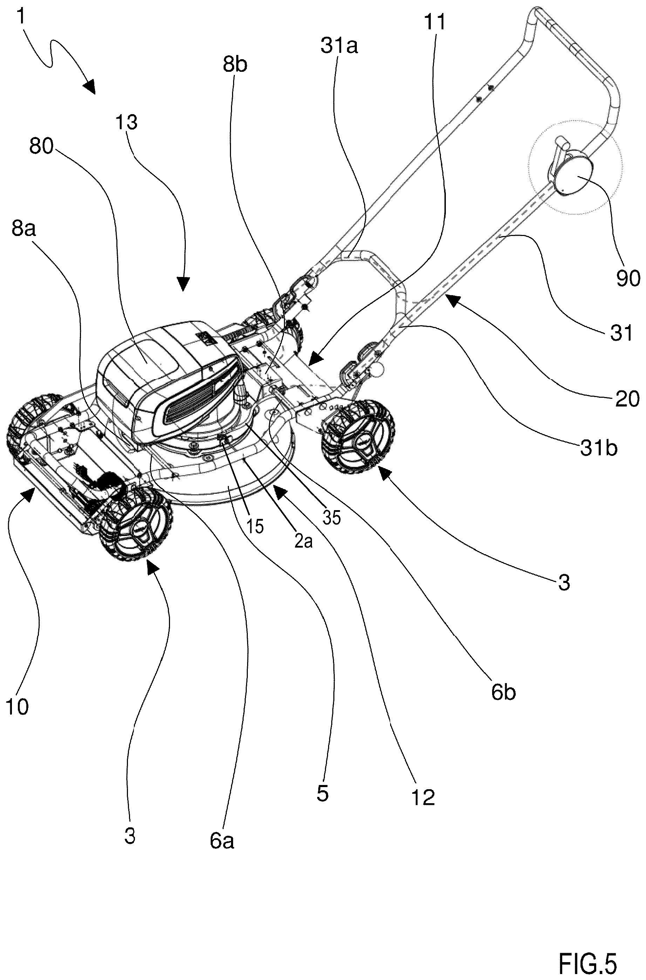

In an alternative embodiment to the joint 40, the actuation system 30 comprises a control lever 90 carried by the handle and drivable by an operator, for example by translation or by rotation, and operatively connected to the operating body 5, as shown in figure 5. The control lever 90 is thus configured to determine, when moved, a simultaneous movement of the operating body 5 along the translation axis Y.

The actuation system 30 preferably comprises one or more drive cables 31 connecting the actuation system 30, in particular the drive handle 20 or the control lever 90, to the operating body 5: the connection cables are configured to transmit a movement of the drive handle 20 along the control axis D, or a movement of the control lever 90, to the operating body 5 to determine the simultaneous movement along the translation axis Y. It should be noted that a movement of the drive handle 20 along the control axis D results in a proportional movement in amplitude of the operating body 5 along the translation axis Y, in particular in which an increase of a movement of the drive handle 20 along the control axis D results in a proportional increase of a movement of the operating body 5 along the translation axis Y. In other words, the more an operator moves the drive handle 20 towards the left or towards the right, the more the operating body 5 will move accordingly.

In detail, the actuation system 30 can comprise a first and a second drive cable 31a, 31b, as shown in figure 2, in which each first and second cable is placed in connection between the drive handle 20 and the operating body 5 or between the control lever 90 and the operating body 5: the first cable 31a can be configured to pull the operating body 5 towards the right along the translation axis Y, while the second cable 31b can be configured to pull the operating body 5 towards the left along the translation axis Y. Steel cables are flexible and can be made of steel or composed of steel wires. In particular, the first drive cable 31a extends in length between a first end, constrained to a first portion of the operating body, and a second end connected to the joint, in particular to a traction element 32 of the joint 40. Similarly, the second drive cable 31b extends in length between a first end, constrained to a second portion of the operating body, and a second end connected to the joint, in particular to a traction element 32 of the joint 40. The first and the second portion of the operating body 5 to which the respective cables 31a, 31b are constrained are opposite each other with respect to the rotation axis A of the work tool: in particular the first portion is placed on the right side of the mobile device, while the second portion is arranged on the left side of the mobile device.

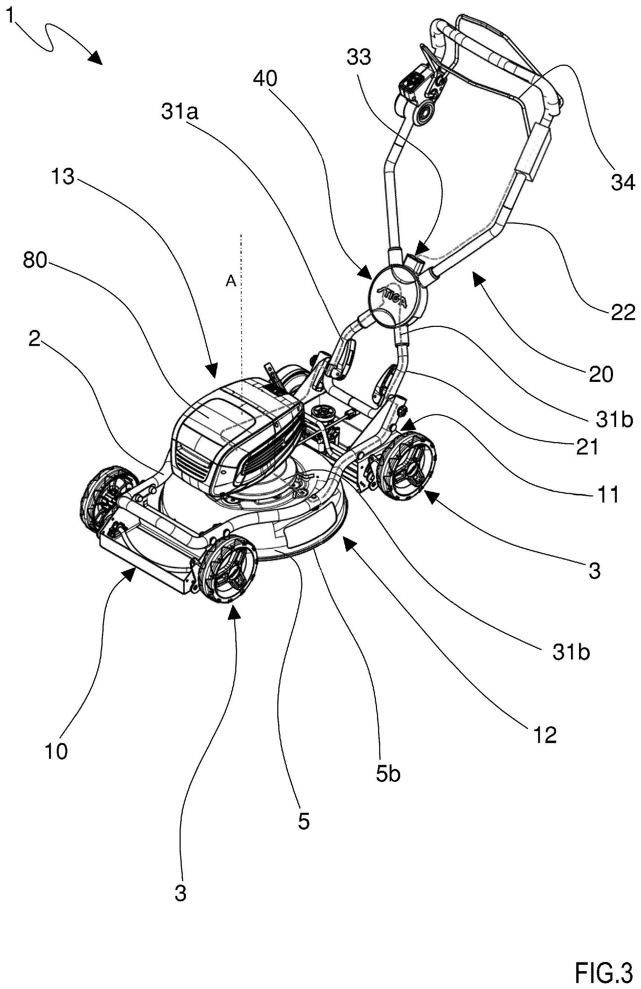

Alternatively, the actuation system 30 can comprise a single drive cable, as shown in figure 3, extending between a first end and a second end both connected to the operating body 5, and in which the single drive cable transits through the joint 40: the single cable can be wound to the joint 40 or is constrained to a traction element 32 of the joint. For example, the first end of the single drive cable is connected to a right portion of the operating body, while the second end of the single drive cable is connected to a left portion of the operating body.

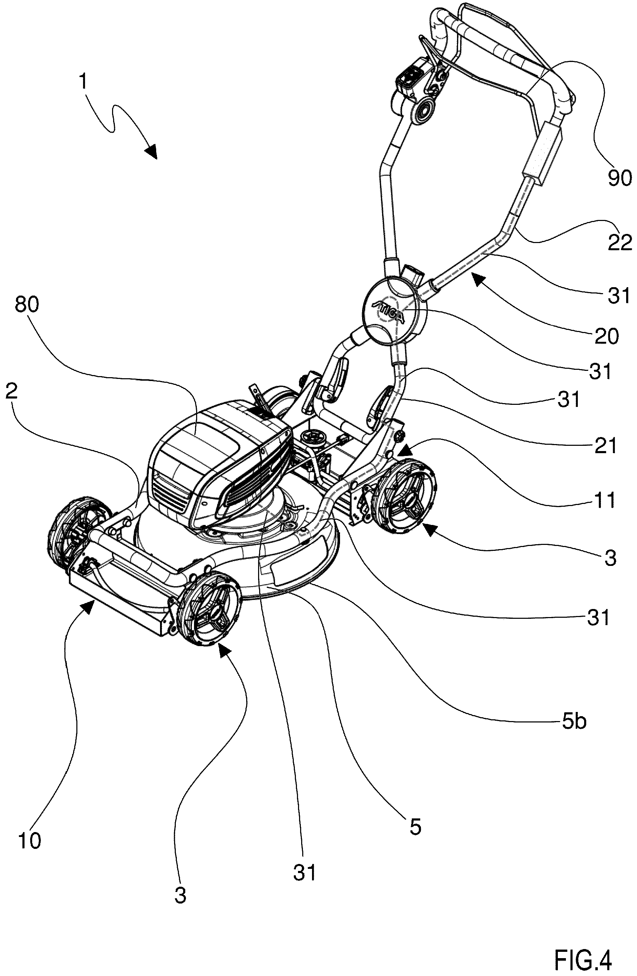

In a further alternative embodiment, the actuation system 30 can comprise a single drive cable, as shown in figure 4 and 5, extending between a first end, connected to a portion of the operating body, and a second end connected to the control lever 90. The single drive cable can pass through the joint 40 to reach the control lever located near or at the gripping portion 22a of the drive handle. In such an embodiment with a single drive cable, the actuation system 30 can comprise a return element, for example a traction or compression spring, interposed in connection between the operating body 5 and the support frame 2 and configured to move the operating body 5 along a return direction opposite a drive direction determined by the single drive cable. For example, if the single drive cable is configured to pull the operating body towards the right, the return element is configured to pull the operating body towards the left, such that when the operator releases the control lever 90, the operating body is moved by the return element towards the left, for example in the central position. Similarly, if the single drive cable is configured to pull the operating body towards the left, the return element is configured to pull the operating body towards the right, such that when the operator releases the control lever 90, the operating body is moved by the return element towards the right, for example in the central position. In a further embodiment not shown in the accompanying drawings, the actuation system 30 can comprise a single drive cable, extending between a first end, connected to a portion of the operating body, and a second end connected to the joint 40, such that a rotation of the drive handle about the rotation axis B drives the single drive cable to pull the operating body to the left or right side. In such an embodiment with a single drive cable, the actuation system 30 can comprise a return element, for example a traction or compression spring, interposed in connection between the operating body 5 and the support frame 2 and configured to move the operating body 5 along a return direction opposite a drive direction determined by the single drive cable. For example, if the single drive cable is configured to pull the operating body towards the right, the return element is configured to pull the operating body towards the left, such that when the operator releases the drive handle or returns it to a central position, the operating body is moved by the return element towards the left, for example to the respective central position. Similarly, if the single drive cable is configured to pull the operating body towards the left, the return element is configured to pull the operating body towards the right, such that when the operator releases the drive handle or returns it to a central position, the operating body is moved by the return element towards the right, for example in the central position.

In a further embodiment shown in figure 5, the actuation system 30 can comprise one or more drive cables 31, for example one or two drive cables, in which at least one end of the drive cable is constrained to a pulling portion 2a of the support frame 2, and in which the drive cable passes through the operating body 5. Such an actuation system can further comprise at least one sheath 35 for each drive cable 31: the sheath 35 can be flexible or rigid. The drive cable 31 is inserted into the respective sheath 35 and extends between a first end 31', constrained to the pulling portion 2a of the support frame a, and a second end 31" connected to the control lever 90 or to the joint of the drive handle 20: similarly the sheath 35 extends between a respective first end 35' and second end 35". The operating body 5 comprises a respective pulling portion 15 comprising a through hole for the passage of the drive cable 31, in which the pulling portion 15 of the operating body 5 is interposed between the first end 31' of the drive cable 31 and the first end 35' of the sheath 35: in particular the first end 35' of the sheath 35 is abutting the pulling portion 15 of the operating body 5. Thereby, a traction of the winding cable 31 determines the simultaneous movement of the operating body towards the left or right side of the mobile device, in particular so that the first end 31' of the drive cable 31 approaches the pulling portion 15 of the operating body 5.

In the embodiment of figure 5, the actuation system 30 comprises a first drive cable 31a, a second drive cable 31b, a first sheath 35a mounted on the first drive cable 31a, a second sheath 35b mounted on the second drive cable 31b, a first pulling portion 2a' and a second pulling portion 2a" of the support frame 2, and a first pulling portion 15a and a second pulling portion 15b of the operating body, in which:
- the first end 31a' of the first drive cable 31a is constrained to the first pulling portion 2a' of the support frame 2, and the first sheath 35a is abutted against the first pulling portion 15a of the operating body 5, in which the first pulling portion 15a of the operating body 5 is interposed between the first sheath 35 and the first pulling portion 2a' of the support frame 2;
- the first end 31b' of the second drive cable 31b is constrained to the second pulling portion 2a" of the support frame 2, and the second sheath 35b is abutted against the second pulling portion 15b of the operating body 5, in which the second pulling portion 15b of the operating body 5 is interposed between the second sheath 35 and the second pulling portion 2a" of the support frame 2.

Figures 6 and 7 show an embodiment of the actuation system 30 of the drive handle 20 which allows the operating body 5 to be moved along the translation axis Y in response to a lateral movement of the drive handle 20 along the control axis D. In such an embodiment, the actuation system 30 comprises a traction element 32 constrained to the drive handle 20 at the joint 40 and movable by rotation substantially about the rotation axis B of said joint 40, such that a rotation of the drive handle 20 determines a similar rotation of the traction element 32. The traction element 32 is thus configured to pull, during a rotation of the drive handle 20, the cables 31 to move the operating body 5 along the translation axis Y towards the left side 12 and the right side 13 of the mobile device 1. The traction element 32 has a circular or semicircular shaped side surface radially spaced from the rotation axis B of the joint 40: the drive cables 31 are at least partially wound around the side surface of the traction element 32, as shown in figures 2 and 3. In particular, the first cable can be wound to a right portion of the side surface, while the second cable can be wound to a left portion of the side surface: it should be noted that the left portion of the side surface faces the left side 12 of the mobile device 1, while the right portion of the side surface faces the right side 13 of the mobile device 1.

In an embodiment, schematically shown for example in figures 2 and 3, the actuation system 30 comprises an engagement system 33 active on the joint 40 and configurable in a locking position in which the engagement system 33 is configured to lock the joint 40 to inhibit the movement of the drive handle 20 along the control axis D: in particular, the rotation of the drive handle 20 about the rotation axis B of the joint 40 is inhibited when the engagement system 33 is in the locking position. The engagement system 33 is further configurable in an unlocking position in which the engagement system 33 is configured to release the joint 40 and allow the movement of the drive handle 20 at least along the control axis D: in particular, the rotation of the drive handle 20 about the rotation axis B of the joint 40 is permitted when the engagement system 33 is in the unlocking position.

The engagement system 33 comprises an activation element 34, for example a handle or a lever, configured to be driven by an operator and to selectively arrange the engagement system 33 in the locking or unlocking position. The activation element 34 can be connected to the joint 40 by a connection cable interposed between the lever and the activation element 34. The engagement system 33, at the joint 40, can comprise a movable locking element controlled by the connection cable to allow or inhibit the rotation of the drive handle about the rotation axis B. In such an embodiment, the movable locking element is configured to cooperate with teeth placed on at least one of the first and the second member of the drive handle, for example on the first coupling element 42 of the first member 21.

In accordance with an embodiment shown in figures 24 and 25, the actuation system 30 can comprise an epicycloidal gearbox 36 operatively interposed between the first member 21 and the second member 22 of the drive handle 20 and configured to increase or reduce, in particular increase, a lateral movement of the operating body 5 along the translation axis Y in response to the same rotation of the second member 22 of the drive handle about the rotation axis B. In other words, the epicycloidal gearset 36 defines a transmission relationship between the movement of the second member 22 of the drive handle 20, and the movement of the operating body 5: such a transmission relationship can be configured as a displacement multiplier or as a displacement reducer of the operating body 5, depending on the configuration of the epicycloidal gearset. The embodiment of figure 24 and 25 is adapted to multiply the displacement imposed by the second member 22 on the operating body 5.

In general terms, the epicycloidal gearset 36 comprises:
- a central pinion 37 having a rotation axis parallel to or substantially coincident with the rotation axis B of the joint 40;
- an outer circular crown 39, in particular having internal teeth, movable by rotation about the rotation axis of the central pinion 37;
- at least one gear train 38 carrying one or more planets 38a, 38b, 38c and movable by rotation about the rotation axis of the central pinion 37: the planets 38a, 38b, 38c are radially interposed between the central pinion 37 and the outer circular crown 39 and mesh with the central pinion 37 and with the outer circular crown 39.

In the embodiment of figures 24 and 25, the epicycloidal gearset 36 comprises:
- the outer circular crown 39 constrained and integral with the first member 21 of the drive handle 20: in particular the outer circular crown 39 is fixed with respect to the second member 22;
- the gear train 38 constrained and integral with the second member 22 of the drive handle 20, such that a rotation of the second member 22 about the rotation axis B determines a simultaneous rotation of the gear train 38 about the rotation axis of the gear train 38: it should be noted in particular that each planet 38a, 38b, 38c is movable by rotation about a rotation axis D thereof and about the rotation axis of the gear train,
- the central pinion 37 integral with the traction element 32: the traction element is optionally a pulley operatively connected to the drive cable(s) 31 to transmit motion to the operating body 5. For example, a drive cable can be wound or constrained to the pulley to transmit motion to the operating body 5.

Alternatively, the outer circular crown 39 can be integral with the second member 22, the gear train 38 constrained to the first member 21, and the central pinion 37 integral with the traction element 32.

In accordance with the embodiment comprising the epicycloidal gearset, the actuation system 30 can further comprise the engagement system 33, previously described, integral with the second member 22 and externally acting on the outer circular crown 39 of the epicycloidal gearset. In this regard, the outer circular crown 39 comprises teeth 39a extending radially externally and configured to cooperate with the engagement system 33 at least when the engagement system 33 is in the locking position.

The joint 40 of the drive handle 20 can be further made in accordance with a further embodiment shown in figures 12 to 19: in such a case, the joint 40 can operate like the actuation system 30 previously described to move the operating body 5, or it can only allow the lateral movement of the drive handle 20, without therefore necessarily driving the operating body 5 along the translation direction Y or along the vertical direction Z.

Alternatively, in an embodiment not shown, the actuation system 30 can be configured to determine, upon a displacement of the drive handle 20 along the control axis, the movement of the operating body 5 along the vertical axis Z, such as to vary a distance interposed between the work tool 4 and the support plane: in other words, such a variation in height determines a similar variation in the distance between the work tool 4 and the ground during an operating condition, such as to vary a cutting height of the turfgrass.

In an embodiment in which the device is self-driving as shown in figure 10, the mobile device 1 does not comprise the drive handle 20. In such a configuration, the self-driving mobile device 1 can comprise at least one obstacle detector 9 configured to detect one or more obstacles in the work area during a movement of the mobile device 1 in the work area. In particular, the obstacle detector 9 can comprise at least one of a proximity sensor, for example an ultrasonic or optical sensor, a camera, or a flight time sensor. If a camera is present, a control unit 50 can be configured to detect and optionally recognize an obstacle 100, for example, identifying the obstacle 100. The control system related to self-driving can comprise a peripheral wire system, a GPS sensor guidance system, or one or more cameras. The self-driving control system will not be described in detail, as it is already part of the prior art.

The self-driving mobile device 1 can further comprise at least one actuator operatively connected to the operating body 5 and configured to move the operating body 5 along the translation axis Y, in particular towards the left side 12 or the right side 13 of the mobile device 1: in such a configuration, such an actuator thus defines the actuation system 30 of the operating body 5.

A control unit 50 of the mobile device 1 is operatively connected to the traction motor of the mobile device 1, to the aforementioned obstacle detector 9 and to the actuator of the operating body 5: the control unit 50 can be configured to receive from the obstacle detector 9 at least one signal representative of the presence of an obstacle 100 along a path of the mobile device 1, and if the detector detects an obstacle 100, command the actuator to move the operating body 5 to the central position.

The control unit 50 can be further configured to determine whether the obstacle 100 is at the left side 12 or right side of the mobile device 1, and determine whether the operating body 5 is in the left lateral position or the right lateral position. The control unit 50 is thus configured for:
- if the obstacle 100 is established to be at the left side 12 of the mobile device 1 and the operating body 5 is established to be in the left lateral position, commanding the actuator to move the operating body 5 from the left lateral position to the central position or the right lateral position;
- if the obstacle 100 is established to be at the right side 13 of the mobile device 1 and the operating body 5 is established to be in the right lateral position, commanding the actuator to move the operating body 5 from the right lateral position to the central position or to the left lateral position;
- if the obstacle 100 is established to be at the left side 12 of the mobile device 1 and the operating body 5 is established to be in the right lateral position, keep the operating body 5 in the right lateral position;
- if the obstacle 100 is established to be at the right side 13 of the mobile device 1 and the operating body 5 is established to be in the left lateral position, keep the operating body 5 in the left lateral position.

Furthermore, if the obstacle 100 is established to be at the right side 13 and the left side 12 of the mobile device 1, the control unit 50 is configured to control the actuator to move the operating body 5 from the right or left lateral position to the central position and optionally control stopping the movement means 3.

### ADVANTAGES OF THE INVENTION

The present invention allows to operate more easily in zones adjacent to obstacles, such as trees, hedges or flower beds. In particular, the present invention allows a greater flexibility of use of the mobile device 1, in that the translation of the operating body 5, in particular of the cutting plate, allows to get closer to otherwise inaccessible areas. Moreover, such translation allows the operator to distance himself with respect to the obstacle 100 and at the same time keep the operating body 5 against the obstacle 100.

It should further be noted that in the event of the presence of peripheral hedges, it is often necessary to operate with mobile device 1 below part of the hedge itself, up to the root of the hedge itself. The mobile device 1 of the present invention allows to operate below the hedge while the operator is in a translational position, moving the operating body laterally along the translation axis Y and/or moving the drive handle along the control axis D and/or adjusting the height of the drive handle, so as to speed up and facilitate the maintenance operations within the work area.

## Claims

1. Manually-driven mobile device (1) for land maintenance, comprising a support frame (2) carrying:
- movement means (3) configured to allow or determine a movement of the mobile device (1), said movement means (3) defining a support plane (SP) for the mobile device (1);
- at least one work tool (4) configured to perform maintenance operations;
wherein said mobile device (1) extends:
- in length between a front portion (10) and a rear portion (11) to define a longitudinal axis (X) of the mobile device (1),
- in height along a vertical axis (Z) orthogonal to said longitudinal axis (X) and to the support plane (SP),
- in width along a transverse axis (W) between a left side (12), interposed as connection between the front portion (10) and the rear portion (11) of the mobile device (1), and a right side (13), also interposed as connection between the front portion (10) and the rear portion (11) of the mobile device (1), said right side (13) being opposite and positioned at a distance from said left side (12), said transverse axis (W) being orthogonal to the longitudinal axis (X),
wherein said mobile device (1) carries a drive handle (20) configured to allow an operator to drive said mobile device (1), said drive handle (20) comprising a joint (40) configured to vary in height, with respect to said vertical axis (Z), a gripping portion (22a) of the drive handle (20), wherein said drive handle (20) comprises:
- a first member (21) extending for a first length between:
o a first end and
o a second end carrying or comprising at least a first coupling element (42) of said joint (40);
- a second member (22), movable and distinct with respect to said first member (21) of the drive handle (20), extending for a second length between:
o a first end comprising or carrying at least a second coupling element (43) of said joint (40) and
o a second end comprising said gripping portion (22a) configured to be grasped by an operator,
wherein said drive handle (20) further comprises a regulating insert (44) interposed between the first coupling element (42) and the second coupling element (43) of said joint (40) and being movable in rotation about a rotation axis (B) of the joint (40) with respect to the first coupling element (42) and/or the second coupling element (43) of said joint (40), and
wherein said joint (40) is configured in such a way that a rotation of said regulating insert (44) about the rotation axis (B) of the joint (40) with respect to the first coupling element (42) and/or the second coupling element (43) determines a simultaneous variation in height of the gripping portion (22a) of the drive handle (20) with respect to the support plane (SP),
**characterised in that** said regulating insert (44) has a wedge shape in cross-section.

2. Device (1) according to claim 1, wherein the first end of the first member (21) of said drive handle (20) is constrained at the rear portion (11) of the mobile device (1) and wherein said second coupling element (43) is axially constrained to the first coupling element (42) of the first member (21) of the drive handle (20).

3. Device (1) according to any one of the preceding claims, wherein said rotation axis (B) of the joint (40) is transverse to the support plane (SP) and wherein said rotation axis (B) of the joint (40) is parallel to, or lying on, a plane XZ passing through the longitudinal axis (X) and the vertical axis (Z).

4. Device (1) according to any one of the preceding claims, wherein the second member (22) of the drive handle (20) is positionable at least in:
- a lowered position in which the gripping portion (22a) of the drive handle (20) has a first distance with respect to the support plane (SP) of the mobile device (1), and in which said regulating insert (44) is positioned in a first angular position; and in
- a raised position in which the gripping portion (22a) of the drive handle (20) has a second distance with respect to the support plane (SP) of the mobile device (1), said second distance being greater than the first distance, and in which said regulating insert (44) is positioned in a second angular position angularly rotated, along said rotation axis (B) of the joint (40), with respect to said first angular position, by an angle between 170° and 190°,
wherein the second member (22) of the drive handle (20) varies, between the lowered position and the raised position, an inclination thereof with respect to the support plane (SP) by an angle between 4° and 20°, said inclination with respect to the support plane (SP) being measured on a plane passing through the longitudinal axis (X) and the vertical axis (Z) of the mobile device (1), and
wherein a rotation of said regulating insert (44) about the rotation axis (B) of the joint (40) determines a simultaneous rotation of the second member (22) of the drive handle (20) about a virtual axis (C), said rotation axis (B) of the joint (40) being orthogonal to said virtual axis (C) of the second member (22) of the handle (20).

5. Device (1) according to claim 1, wherein said regulating insert (44) radially extends about the rotation axis (B) of the joint (40) and extends in thickness between a first abutment plane (P1), configured to contact the first coupling element (42) of the drive handle (20), and a second abutment plane (P2), configured to contact the second coupling element (43) of the drive handle (20),
said first abutment plane (P1) and said second abutment plane (P2) determining a relative inclination between the first coupling element (42) and the second coupling element (43) to define said wedge shape and determining an inclination of the rotation axis (B) of the joint (40) with respect to the support plane (SP), said inclination being projected on said plane XZ, said first and second abutment plane being inclined relative to each other by an angle α between 4° and 20°,
wherein a rotation of said regulating insert (44) of the joint (40) with respect to the first coupling element (42) and/or to the second coupling element (43) of said joint (40) determines a simultaneous variation of the inclination of the rotation axis (B) of the joint (40) with respect to the support plane (SP), said variation of inclination determining the consequent variation of height of the gripping portion (22a) of the drive handle (20),
wherein the first abutment plane (P1) and the second abutment plane (P2) of the regulating insert (44) are transverse to the vertical axis (Z), wherein the first abutment plane (P1) and the second abutment plane (P2) of the regulating insert (44) are both orthogonal to a plane XZ passing through the longitudinal axis (X) and the vertical axis (Z).

6. Device (1) according to the preceding claim, wherein:
- said regulating insert (44) defines a disc-like regulating plate (44a) having a wedge-like cross-section,
- said first coupling element (42) defines a first disc-like plate (42a), said first disc-like plate (42a) having a first abutment plane adapted to contact the first abutment plane of the regulating plate (44a),
- said second coupling element (43) defines a second disc-like plate (43a), said second disc-like plate (43a) having a second abutment plane adapted to contact the second abutment plane of the regulating plate (44a),
wherein said first abutment plane (P1) and second abutment plane (P2) of the regulating plate (44a) are inclined relative to each other by said angle α and wherein the first abutment plane of the first plate (42a) and the second abutment plane of the second plate (43a) are inclined relative to each other by said angle α.

7. Device (1) according to the preceding claim, wherein said joint (40) is configurable in:
- an adjustment condition, wherein said regulating plate (44a) is movable by rotation about said rotation axis (B) of the joint (40) to vary the height of the gripping portion (22a) of the drive handle (20), and wherein said joint (40) is configured to allow a rotation of the second member (22) with respect to the first member (21) of the drive handle (20) about said rotation axis (B), wherein said second plate (42a) is movable by rotation about said rotation axis (B) with respect to the first plate (43a),
- a locking condition, wherein a relative rotation between the regulating plate (44a) and at least one of the first plate (42a) and the second plate (43a) of the drive handle (20) is inhibited, said locking condition precluding a variation in height of the handle (20) with respect to the support plane (SP), and wherein a relative rotation between the first plate (42a) and the second plate (43a) of the drive handle (20) is inhibited.

8. Device (1) according to the preceding claim, wherein said joint (40) comprises a closing system configured to connect the regulating plate (44a), the first plate (42a) and the second plate (43a) of the drive handle (20) to each other,
said closing system being further configured to define said locking condition and said adjustment condition of the joint (40),
said closing system abutting, during the locking condition, said regulating plate (44a) between the first plate (42a) and the second plate (43a) of the joint (40) to prevent a relative rotation between the first plate (42a), the regulating plate (44a) and the second plate (43a),
wherein said first plate (42a), said second plate (43a) and said regulating plate (44a) comprise respective central holes aligned with each other, and
wherein said closing system comprises:
- a pin (61) passing transversely in said respective central holes through the first plate (42a), the regulating plate (44a) and the second plate (43a);
- a first stop element (62) engaged at a first end of said pin (61) and defining an abutment against at least one of the first plate (42a) and the second plate (43a);
- a second stop element (63) engaged at a second end of the pin (61) and movable between:
o a closed position in which the first plate (42a), the regulating plate (44a) and the second plate (43a) are forcefully compressively engaged with each other to define an axial constraint along the rotation axis (B) of the joint (40),
wherein the first stop element (62) is in forced abutment against the first plate (42a) or the second plate (43a), while a portion of said second stop element (63) is in forced abutment against the other of the first plate (42a) and the second plate (43a), said regulating plate (44a) being pressed along said rotation axis (B) of the joint (40) between said first plate (42a) and said second plate (43a),
said closing position defining the locking condition of the joint (40),
o an opening position in which the pin (61) allows an axial degree of freedom, along the rotation axis (B), to at least one of the first plate (42a), the second plate (43a) and the regulating plate (44a), said axial degree of freedom allowing a rotational degree of freedom of the regulating plate (44a), said opening position defining the adjustment condition of the joint (40).

9. Device (1) according to any one of claims 5 to 8, wherein said joint (40) comprises an elastic adjustment element (45) interposed and acting between the regulating plate (44a) and at least one of the first plate (42a) and the second plate (43a) of the drive handle (20), said elastic adjustment element (45) being configured to exert a repulsive force between the regulating plate (44a) and said at least one of the first plate (42a) and the second plate (43a),
wherein, when the joint (40) is in the adjustment condition, said elastic element axially distances the regulating plate (44a) from at least one of the first plate (42a) and the second plate (43a) along the rotation axis (B) of the joint (40), said distancing allowing a rotational degree of freedom of the regulating plate (44a) with respect to said first plate (42a) and/or with respect to said second plate (43a) to determine the height adjustment of the drive handle (20).

10. Device (1) according to any one of claims 6 to 9, wherein:
- said regulating plate (44a) comprises teeth (47) along at least one of the first abutment plane and the second abutment plane,
- said first coupling element (42) and/or said second coupling element (43) comprise respective teeth (48) configured to cooperate with the teeth (47) of the regulating insert (44) at least in the locking condition of the joint (40),
said respective teeth (47, 48) being configured to inhibit, when cooperating with each other, a relative rotation between the regulating insert (44) and said first coupling element (42) and said second coupling element (43), in the locking condition.

11. Device (1) according to any one of the preceding claims, wherein said joint (40) is configured to allow the movement of the second member (22) of said drive handle (20), along at least one control axis (D), said control axis (D) comprising at least one axial component parallel to said transverse axis (W),
said drive handle (20) being configured to rotate about said rotation axis (B) along a rotation plane orthogonal to said rotation axis (B) and transverse to the support plane (SP), such a rotation determining the movement of the drive handle (20) along said control axis (D) towards a left side (12) and/or towards a right side (13) of the mobile device (1).

12. Device (1) according to any one of the preceding claims, wherein the support frame (2) further carries an operating body (5), said operating body (5) carrying and/or housing said work tool (4) and defining an operating zone of the mobile device (1) configured to perform maintenance operations,
wherein said operating body (5) is movable, with respect to said support frame (2), along at least one work axis parallel or coinciding with at least one in the group of the transverse axis (W) and the vertical axis (Z),
said mobile device (1) including an actuation system comprising said joint (40) or a control lever (90) and configured to move the operating body (5) along said at least one work axis in response to a movement of said actuation system.

13. Device (1) according to the preceding claim when dependent on claim 11, wherein the actuation system is configured to convert the movement of the drive handle (20) along the control axis (D) into a simultaneous movement of the operating body (5) along said work axis.

14. Device (1) according to the preceding claim, wherein the operating body (5) is movable:
- along a translation axis (Y) parallel to the transverse axis (W), and parallel to the support plane (SP) and transverse to the longitudinal axis (X),
and wherein the actuation system is configured to convert:
o a rightwards movement of the drive handle (20) along the control axis (D) into a simultaneous movement of the operating body (5) to the left along the translation axis (Y), and
o a leftwards movement of the drive handle (20) along the control axis (D) into a simultaneous movement of the operating body (5) to the right along the translation axis (Y), or vice versa
and/or
- along said vertical axis (Z) to vary a distance interposed between the work tool (4) and the support plane (SP),
and wherein the actuation system is configured to convert:
o a rightwards movement of the drive handle (20) along the control axis (D) into an increase in the height of the operating body (5) and thus into an increase in the distance interposed between the work tool (4) and the support plane (SP), and
o a leftwards movement of the drive handle (20) along the control axis (D) into a reduction of the height of the operating body (5) and thus into a reduction of the distance interposed between the work tool (4) and the support plane (SP),
or vice versa.

15. Device (1) according to any one of the preceding claims, wherein the first member (21) of the drive handle (20) comprises:
- a first coupling portion (21a) configured to constrain at the rear to the mobile device (1) and laterally towards the right side (13) of the mobile device (1),
- a second coupling portion (21b) configured to constrain at the rear to the mobile device (1) and laterally towards the left side (12) of the mobile device (1), said second coupling portion (21b) being distinct and spaced along the transverse axis (W) from the first coupling portion (21a),
- a first section (21c) extending between the first coupling portion (21a) and said joint (40),
- a second portion (21d) extending between the second coupling portion (21b) and said joint (40),
said first and second section (21d) of the drive handle (20) converging centrally in said single joint (40) of the drive handle (20),
wherein said joint (40) is centrally interposed between said first and second coupling portion (21b) of the drive handle (20) along the transverse axis (W), according to a view from the rear of the mobile device (1),
wherein said first and second section (21d) are joined together to define a first member (21) of the drive handle (20) in a single body, said single body comprising said first coupling portion (21a), said first section (21c), said second section (21d) and said second coupling portion (21b), said single body having an arcuate "U" shape,
wherein said joint (40) is centrally interposed between said first and second coupling portion (21b) of the drive handle (20) along the transverse axis (W),
the second member (22) of the handle (20) extending laterally and in height from said joint (40) to define the gripping portion (22a) of the drive handle (20),
wherein said drive handle (20) defines an inverted y (gamma) shape or X shape.

## Patentansprüche

1. Manuell betriebene mobile Vorrichtung (1) für die Bodenpflege, umfassend einen Stützrahmen (2), der Folgendes trägt:
- Bewegungsmittel (3), die dazu konfiguriert sind, eine Bewegung der mobilen Vorrichtung (1) zu ermöglichen oder zu bestimmen, wobei die Bewegungsmittel (3) eine Stützebene (SP) für die mobile Vorrichtung (1) definieren;
- mindestens ein Arbeitswerkzeug (4), das dazu konfiguriert ist, Pflegearbeiten durchzuführen;
wobei sich die mobile Vorrichtung (1) wie folgt erstreckt:
- in der Länge zwischen einem vorderen Abschnitt (10) und einem hinteren Abschnitt (11), um eine Längsachse (X) der mobilen Vorrichtung (1) zu definieren,
- in der Höhe entlang einer vertikalen Achse (Z) orthogonal zu der Längsachse (X) und zu der Stützebene (SP),
- in der Breite entlang einer Querachse (W) zwischen einer linken Seite (12), die als Verbindung zwischen dem vorderen Abschnitt (10) und dem hinteren Abschnitt (11) der mobilen Vorrichtung (1) eingefügt ist, und einer rechten Seite (13), die ebenfalls als Verbindung zwischen dem vorderen Abschnitt (10) und dem hinteren Abschnitt (11) der mobilen Vorrichtung (1) eingefügt ist, wobei die rechte Seite (13) der linken Seite (12) gegenüberliegt und in einem Abstand von dieser positioniert ist, wobei die Querachse (W) orthogonal zu der Längsachse (X) ist,
wobei die mobile Vorrichtung (1) einen Antriebsgriff (20) trägt, der dazu konfiguriert ist, es einer Bedienperson zu ermöglichen, die mobile Vorrichtung (1) zu fahren, wobei der Antriebsgriff (20) ein Gelenk (40) umfasst, das dazu konfiguriert ist, einen Greifabschnitt (22a) des Antriebsgriffs (20) in Bezug auf die vertikale Achse (Z) in der Höhe zu variieren,
wobei der Antriebsgriff (20) Folgendes umfasst:
- ein erstes Element (21), das sich über eine erste Länge erstreckt zwischen:
o einem ersten Ende und
o einem zweiten Ende, das mindestens ein erstes Kupplungselement (42) des Gelenks (40) trägt oder umfasst;
- ein zweites Element (22), das bewegbar und in Bezug auf das erste Element (21) des Antriebsgriffs (20) verschieden ist und sich über eine zweite Länge erstreckt zwischen:
o einem ersten Ende, das mindestens ein zweites Kupplungselement (43) des Gelenks (40) umfasst oder trägt, und
o einem zweiten Ende umfassend den Greifabschnitt (22a), der dazu konfiguriert ist, von einer Bedienperson ergriffen zu werden,
wobei der Antriebsgriff (20) ferner einen Reguliereinsatz (44) zwischen dem ersten Kupplungselement (42) und dem zweiten Kupplungselement (43) des Gelenks (40) umfasst und in Rotation um eine Rotationsachse (B) des Gelenks (40) in Bezug auf das erste Kupplungselement (42) und/oder das zweite Kupplungselement (43) des Gelenks (40) bewegbar ist, und
wobei das Gelenk (40) derart konfiguriert ist, dass eine Rotation des Reguliereinsatzes (44) um die Rotationsachse (B) des Gelenks (40) in Bezug auf das erste Kupplungselement (42) und/oder das zweite Kupplungselement (43) eine gleichzeitige Höhenvariation des Greifabschnitts (22a) des Antriebsgriffs (20) in Bezug auf die Stützebene (SP) bestimmt,
**dadurch gekennzeichnet, dass** der Reguliereinsatz (44) im Querschnitt eine Keilform aufweist.

2. Vorrichtung (1) nach Anspruch 1, wobei das erste Ende des ersten Elements (21) des Antriebsgriffs (20) an dem hinteren Abschnitt (11) der mobilen Vorrichtung (1) begrenzt ist, und wobei das zweite Kupplungselement (43) axial an das erste Kupplungselement (42) des ersten Elements (21) des Antriebsgriffs (20) begrenzt ist.

3. Vorrichtung (1) nach einem der vorstehenden Ansprüche, wobei die Rotationsachse (B) des Gelenks (40) quer zu der Stützebene (SP) verläuft und wobei die Rotationsachse (B) des Gelenks (40) parallel zu einer durch die Längsachse (X) und die vertikale Achse (Z) verlaufenden Ebene XZ verläuft oder darauf liegt.

4. Vorrichtung (1) nach einem der vorstehenden Ansprüche, wobei das zweite Element (22) des Antriebsgriffs (20) positionierbar ist zumindest in:
- einer abgesenkten Position, in der der Greifabschnitt (22a) des Antriebsgriffs (20) einen ersten Abstand in Bezug auf die Stützebene (SP) der mobilen Vorrichtung (1) aufweist und in der der Reguliereinsatz (44) in einer ersten Winkelposition positioniert ist; und in
- einer angehobenen Position, in der der Greifabschnitt (22a) des Antriebsgriffs (20) einen zweiten Abstand in Bezug auf die Stützebene (SP) der mobilen Vorrichtung (1) aufweist, wobei der zweite Abstand größer als der erste Abstand ist, und in der der Reguliereinsatz (44) in einer zweiten Winkelposition positioniert ist, die entlang der Rotationsachse (B) des Gelenks (40) in Bezug auf die erste Winkelposition um einen Winkel zwischen 170° und 190° winkelig gedreht ist,
wobei das zweite Element (22) des Antriebsgriffs (20) zwischen der abgesenkten Position und der angehobenen Position seine Neigung in Bezug auf die Stützebene (SP) um einen Winkel zwischen 4° und 20° variiert, wobei die Neigung in Bezug auf die Stützebene (SP) in einer Ebene gemessen wird, die durch die Längsachse (X) und die vertikale Achse (Z) der mobilen Vorrichtung (1) verläuft, und
wobei eine Rotation des Reguliereinsatzes (44) um die Rotationsachse (B) des Gelenks (40) eine gleichzeitige Rotation des zweiten Elements (22) des Antriebsgriffs (20) um eine virtuelle Achse (C) bestimmt, wobei die Rotationsachse (B) des Gelenks (40) orthogonal zu der virtuellen Achse (C) des zweiten Elements (22) des Griffs (20) verläuft.

5. Vorrichtung (1) nach Anspruch 1, wobei sich der Reguliereinsatz (44) radial um die Rotationsachse (B) des Gelenks (40) erstreckt und sich in der Dicke zwischen einer ersten Anschlagebene (P1), die dazu konfiguriert ist, das erste Kupplungselement (42) des Antriebsgriffs (20) zu kontaktieren, und einer zweiten Anschlagebene (P2), die dazu konfiguriert ist, das zweite Kupplungselement (43) des Antriebsgriffs (20) zu kontaktieren, erstreckt,
wobei die erste Anschlagebene (P1) und die zweite Anschlagebene (P2) eine relative Neigung zwischen dem ersten Kupplungselement (42) und dem zweiten Kupplungselement (43) bestimmen, um die Keilform zu definieren und eine Neigung der Rotationsachse (B) des Gelenks (40) in Bezug auf die Stützebene (SP) zu bestimmen, wobei die Neigung auf die Ebene XZ projiziert wird, wobei die erste und die zweite Anschlagebene um einen Winkel α zwischen 4° und 20° zueinander geneigt sind,
wobei eine Rotation des Reguliereinsatzes (44) des Gelenks (40) in Bezug auf das erste Kupplungselement (42) und/oder das zweite Kupplungselement (43) des Gelenks (40) eine gleichzeitige Variation der Neigung der Rotationsachse (B) des Gelenks (40) in Bezug auf die Stützebene (SP) bestimmt, wobei die Variation der Neigung die sich daraus ergebende Höhenvariation des Greifabschnitts (22a) des Antriebsgriffs (20) bestimmt,
wobei die erste Anschlagebene (P1) und die zweite Anschlagebene (P2) des Reguliereinsatzes (44) quer zu der vertikalen Achse (Z) verlaufen, wobei die erste Anschlagebene (P1) und die zweite Anschlagebene (P2) des Reguliereinsatzes (44) beide orthogonal zu einer durch die Längsachse (X) und die vertikale Achse (Z) verlaufenden Ebene XZ sind.

6. Vorrichtung (1) nach dem vorstehenden Anspruch, wobei:
- der Reguliereinsatz (44) eine scheibenartige Regulierplatte (44a) mit einem keilförmigen Querschnitt definiert,
- das erste Kupplungselement (42) eine erste scheibenartige Platte (42a) definiert, wobei die erste scheibenartige Platte (42a) eine erste Anschlagebene aufweist, die angepasst ist, um die erste Anschlagebene der Regulierplatte (44a) zu kontaktieren,
- das zweite Kupplungselement (43) eine zweite scheibenartige Platte (43a) definiert, wobei die zweite scheibenartige Platte (43a) eine zweite Anschlagebene aufweist, die angepasst ist, um die zweite Anschlagebene der Regulierplatte (44a) zu kontaktieren,
wobei die erste Anschlagebene (P1) und die zweite Anschlagebene (P2) der Regulierplatte (44a) um den Winkel α zueinander geneigt sind und wobei die erste Anschlagebene der ersten Platte (42a) und die zweite Anschlagebene der zweiten Platte (43a) um den Winkel a zueinander geneigt sind.

7. Vorrichtung (1) nach dem vorstehenden Anspruch, wobei das Gelenk (40) konfigurierbar ist in:
- einen Einstellzustand, wobei die Regulierplatte (44a) durch Rotation um die Rotationsachse (B) des Gelenks (40) bewegbar ist, um die Höhe des Greifabschnitts (22a) des Antriebsgriffs (20) zu variieren, und wobei das Gelenk (40) dazu konfiguriert ist, eine Rotation des zweiten Elements (22) in Bezug auf das erste Element (21) des Antriebsgriffs (20) um die Rotationsachse (B) zu ermöglichen, wobei die zweite Platte (42a) durch Rotation um die Rotationsachse (B) in Bezug auf die erste Platte (43a) bewegbar ist,
- einen Verriegelungszustand, wobei eine relative Rotation zwischen der Regulierplatte (44a) und mindestens einer der ersten Platte (42a) und der zweiten Platte (43a) des Antriebsgriffs (20) verhindert wird, wobei der Verriegelungszustand eine Höhenvariation des Griffs (20) in Bezug auf die Stützebene (SP) ausschließt, und wobei eine relative Rotation zwischen der ersten Platte (42a) und der zweiten Platte (43a) des Antriebsgriffs (20) verhindert wird.

8. Vorrichtung (1) nach dem vorstehenden Anspruch, wobei das Gelenk (40) ein Schließsystem umfasst, das dazu konfiguriert ist, die Regulierplatte (44a), die erste Platte (42a) und die zweite Platte (43a) des Antriebsgriffs (20) miteinander zu verbinden,
wobei das Schließsystem ferner dazu konfiguriert ist, den Verriegelungszustand und den Einstellzustand des Gelenks (40) zu definieren,
wobei das Schließsystem während des Verriegelungszustands an der Regulierplatte (44a) zwischen der ersten Platte (42a) und der zweiten Platte (43a) des Gelenks (40) anliegt, um eine relative Rotation zwischen der ersten Platte (42a), der Regulierplatte (44a) und der zweiten Platte (43a) zu verhindern,
wobei die erste Platte (42a), die zweite Platte (43a) und die Regulierplatte (44a) jeweilige mittige Löcher umfassen, die miteinander ausgerichtet sind, und
wobei das Schließsystem Folgendes umfasst:
- einen Stift (61), der quer in den jeweiligen mittigen Löchern durch die erste Platte (42a), die Regulierplatte (44a) und die zweite Platte (43a) verläuft;
- - ein erstes Stoppelement (62), das an einem ersten Ende des Stifts (61) in Eingriff steht und einen Anschlag gegen mindestens eine der ersten Platte (42a) und der zweiten Platte (43a) definiert;
- - ein zweites Stoppelement (63), das an einem zweiten Ende des Stifts (61) in Eingriff steht und bewegbar ist zwischen:
o einer geschlossenen Position, in der die erste Platte (42a), die Regulierplatte (44a) und die zweite Platte (43a) kraftschlüssig miteinander in Eingriff stehen, um eine axiale Begrenzung entlang der Rotationsachse (B) des Gelenks (40) zu definieren,
wobei das erste Stoppelement (62) in erzwungenem Anschlag gegen die erste Platte (42a) oder die zweite Platte (43a) ist, während ein Abschnitt des zweiten Stoppelements (63) in erzwungenem Anschlag gegen die andere der ersten Platte (42a) und der zweiten Platte (43a) ist, wobei die Regulierplatte (44a) entlang der Rotationsachse (B) der Verbindung (40) zwischen der ersten Platte (42a) und der zweiten Platte (43a) gedrückt wird,
die Schließposition den Verriegelungszustand des Gelenks (40) definiert,
o eine Öffnungsposition, in welcher der Stift (61) einen axialen Freiheitsgrad entlang der Rotationsachse (B) für mindestens eine der ersten Platte (42a), der zweiten Platte (43a) und der Regulierplatte (44a) erlaubt, wobei der axiale Freiheitsgrad einen Rotationsfreiheitsgrad der Regulierplatte (44a) erlaubt,
die Öffnungsposition den Einstellzustand des Gelenks (40) definiert.

9. Vorrichtung (1) nach einem der Ansprüche 5 bis 8, wobei das Gelenk (40) ein elastisches Einstellelement (45) umfasst, das zwischen der Regulierplatte (44a) und mindestens einer der ersten Platte (42a) und der zweiten Platte (43a) des Antriebsgriffs (20) angeordnet ist und dazwischen wirkt, wobei das elastische Einstellelement (45) dazu konfiguriert ist, eine abstoßende Kraft zwischen der Regulierplatte (44a) und der mindestens einen der ersten Platte (42a) und der zweiten Platte (43a) auszuüben,
wobei, wenn sich das Gelenk (40) in dem Einstellzustand befindet, das elastische Element die Regulierplatte (44a) von mindestens einer der ersten Platte (42a) und der zweiten Platte (43a) entlang der Rotationsachse (B) des Gelenks (40) axial beabstandet, wobei das Beabstanden einen Rotationsfreiheitsgrad der Regulierplatte (44a) in Bezug auf die erste Platte (42a) und/oder in Bezug auf die zweite Platte (43a) ermöglicht, um die Höheneinstellung des Antriebsgriffs (20) zu bestimmen.

10. Vorrichtung (1) nach einem der Ansprüche 6 bis 9; wobei:
- die Regulierplatte (44a) Zähne (47) entlang mindestens einer der ersten Anschlagebene und der zweiten Anschlagebene umfasst,
- das erste Kupplungselement (42) und/oder das zweite Kupplungselement (43) jeweilige Zähne (48) umfassen, die dazu konfiguriert sind, mit den Zähnen (47) des Reguliereinsatzes (44) zumindest in dem Verriegelungszustand des Gelenks (40) zusammenzuwirken,
wobei die jeweiligen Zähne (47, 48) dazu konfiguriert sind, wenn sie miteinander zusammenwirken, eine relative Rotation zwischen dem Reguliereinsatz (44) und dem ersten Kupplungselement (42) und dem zweiten Kupplungselement (43) in dem Verriegelungszustand zu verhindern.

11. Vorrichtung (1) nach einem der vorstehenden Ansprüche, wobei das Gelenk (40) dazu konfiguriert ist, die Bewegung des zweiten Elements (22) des Antriebsgriffs (20) entlang mindestens einer Steuerachse (D) zu ermöglichen, wobei die Steuerachse (D) mindestens eine axiale Komponente parallel zu der Querachse (W) umfasst,
wobei der Antriebsgriff (20) dazu konfiguriert ist, sich um die Rotationsachse (B) entlang einer Rotationsebene orthogonal zu der Rotationsachse (B) und quer zu der Stützebene (SP) zu drehen, wobei eine solche Rotation die Bewegung des Antriebsgriffs (20) entlang der Steuerachse (D) zu einer linken Seite (12) und/oder zu einer rechten Seite (13) der mobilen Vorrichtung (1) bestimmt.

12. Vorrichtung (1) nach einem der vorstehenden Ansprüche, wobei der Stützrahmen (2) ferner einen Betriebskörper (5) trägt, wobei der Betriebskörper (5) das Arbeitswerkzeug (4) trägt und/oder aufnimmt und eine Betriebszone der mobilen Vorrichtung (1) definiert, die dazu konfiguriert ist, Instandhaltungsarbeiten durchzuführen,
wobei der Betriebskörper (5) in Bezug auf den Stützrahmen (2) entlang mindestens einer Arbeitsachse bewegbar ist, die parallel zu oder zusammenfallend mit mindestens einer Achse aus der Gruppe der Querachse (W) und der vertikalen Achse (Z) ist,
wobei die mobile Vorrichtung (1) ein Betätigungssystem einschließt, umfassend das Gelenk (40) oder einen Steuerhebel (90), und dazu konfiguriert ist, den Betriebskörper (5) entlang der mindestens einen Arbeitsachse in Reaktion auf eine Bewegung des Betätigungssystems zu bewegen.

13. Vorrichtung (1) nach dem vorstehenden Anspruch in Abhängigkeit von Anspruch 11, wobei das Betätigungssystem dazu konfiguriert ist, die Bewegung des Antriebsgriffs (20) entlang der Steuerachse (D) in eine gleichzeitige Bewegung des Betriebskörpers (5) entlang der Arbeitsachse umzusetzen.

14. Vorrichtung (1) nach dem vorstehenden Anspruch, wobei der Betriebskörper (5) bewegbar ist:
- entlang einer Translationsachse (Y) parallel zu der Querachse (W), und parallel zu der Stützebene (SP) und quer zu der Längsachse (X),
und wobei das Betätigungssystem dazu konfiguriert ist, Folgendes umzuwandeln:
∘ eine Rechtsbewegung des Antriebsgriffs (20) entlang der Steuerachse (D) in eine gleichzeitige Bewegung des Betriebskörpers (5) nach links entlang der Translationsachse (Y) und
∘ eine Linksbewegung des Antriebsgriffs (20) entlang der Steuerachse (D) in eine gleichzeitige Bewegung des Betriebskörpers (5) nach rechts entlang der Translationsachse (Y),
oder umgekehrt
und/oder
- entlang der vertikalen Achse (Z), um einen Abstand zwischen dem Arbeitswerkzeug (4) und der Stützebene (SP) zu variieren,
und wobei das Betätigungssystem dazu konfiguriert ist, Folgendes umzuwandeln:
∘ eine Rechtsbewegung des Antriebsgriffs (20) entlang der Steuerachse (D) in eine Zunahme der Höhe des Betriebskörpers (5) und somit in eine Zunahme des zwischen dem Arbeitswerkzeug (4) und der Stützebene (SP) eingefügten Abstands und
∘ eine Linksbewegung des Antriebsgriffs (20) entlang der Steuerachse (D) in eine Reduzierung der Höhe des Betriebskörpers (5) und somit in eine Reduzierung des zwischen dem Arbeitswerkzeug (4) und der Stützebene (SP) eingefügten Abstands,
oder umgekehrt.

15. Vorrichtung (1) nach einem der vorstehenden Ansprüche, wobei das erste Element (21) des Antriebsgriffs (20) Folgendes umfasst:
- einen ersten Kupplungsabschnitt (21a), der dazu konfiguriert ist, an der Rückseite der mobilen Vorrichtung (1) und seitlich in Richtung der rechten Seite (13) der mobilen Vorrichtung (1) zu beschränken,
- einen zweiten Kupplungsabschnitt (21b), der dazu konfiguriert ist, an der Rückseite der mobilen Vorrichtung (1) und seitlich in Richtung der linken Seite (12) der mobilen Vorrichtung (1) zu beschränken, wobei der zweite Kupplungsabschnitt (21b) von dem ersten Kupplungsabschnitt (21a) getrennt und entlang der Querachse (W) beabstandet ist,
- einen ersten Abschnitt (21c), der sich zwischen dem ersten Kupplungsabschnitt (21a) und dem Gelenk (40) erstreckt,
- einen zweiten Abschnitt (21d), der sich zwischen dem zweiten Kupplungsabschnitt (21b) und dem Gelenk (40) erstreckt,
wobei der erste und der zweite Abschnitt (21d) des Antriebsgriffs (20) mittig in dem einzelnen Gelenk (40) des Antriebsgriffs (20) zusammenlaufen,
wobei das Gelenk (40) gemäß einer Ansicht von der Rückseite der mobilen Vorrichtung (1) mittig zwischen dem ersten und zweiten Kupplungsabschnitt (21b) des Antriebsgriffs (20) entlang der Querachse (W) angeordnet ist,
wobei der erste und der zweite Abschnitt (21d) miteinander verbunden sind, um ein erstes Element (21) des Antriebsgriffs (20) in einem einzigen Körper zu definieren, wobei der einzige Körper den ersten Kupplungsabschnitt (21a), den ersten Abschnitt (21c), den zweiten Abschnitt (21d) und den zweiten Kupplungsabschnitt (21b) umfasst, wobei der einzige Körper eine gebogene "U"-Form aufweist,
wobei das Gelenk (40) mittig zwischen dem ersten und zweiten Kupplungsabschnitt (21b) des Antriebsgriffs (20) entlang der Querachse (W) angeordnet ist,
das zweite Element (22) des Griffs (20) sich seitlich und in der Höhe von dem Gelenk (40) erstreckt, um den Greifabschnitt (22a) des Antriebsgriffs (20) zu definieren,
wobei der Antriebsgriff (20) eine umgekehrte γ- (Gamma-) Form oder X-Form definiert.

## Revendications

1. Dispositif mobile à conduite manuelle (1) pour l'entretien des terres, comprenant un cadre de support (2) portant :
- des moyens de déplacement (3) configurés pour permettre ou déterminer un déplacement du dispositif mobile (1), lesdits moyens de déplacement (3) définissant un plan de support (SP) pour le dispositif mobile (1) ;
- au moins un outil de travail (4) configuré pour effectuer des opérations d'entretien ;
dans lequel ledit dispositif mobile (1) s'étend :
- en longueur entre une partie avant (10) et une partie arrière (11) pour définir un axe longitudinal (X) du dispositif mobile (1),
- en hauteur le long d'un axe vertical (Z) orthogonal audit axe longitudinal (X) et au plan de support (SP),
- en largeur le long d'un axe transversal (W) entre un côté gauche (12), interposé en tant que connexion entre la partie avant (10) et la partie arrière (11) du dispositif mobile (1), et un côté droit (13), également interposé en tant que connexion entre la partie avant (10) et la partie arrière (11) du dispositif mobile (1), ledit côté droit (13) étant opposé et positionné à une distance dudit côté gauche (12), ledit axe transversal (W) étant orthogonal à l'axe longitudinal (X),
dans lequel ledit dispositif mobile (1) porte une poignée d'entraînement (20) configurée pour permettre à un opérateur d'entraîner ledit dispositif mobile (1), ladite poignée d'entraînement (20) comprenant un joint (40) configuré pour varier en hauteur, par rapport audit axe vertical (Z), une partie de préhension (22a) de la poignée d'entraînement (20),
dans lequel ladite poignée d'entraînement (20) comprend :
- un premier organe (21) s'étendant sur une première longueur entre :
∘ une première extrémité et
∘ une seconde extrémité portant ou comprenant au moins un premier élément de couplage (42) dudit joint (40) ;
- un second élément (22), mobile et distinct par rapport audit premier élément (21) de la poignée d'entraînement (20), s'étendant sur une seconde longueur entre :
∘ une première extrémité comprenant ou portant au moins un second élément de couplage (43) dudit joint (40) et
∘ une seconde extrémité comprenant ladite partie de préhension (22a) configurée pour être saisie par un opérateur,
dans lequel ladite poignée d'entraînement (20) comprend en outre un insert de régulation (44) interposé entre le premier élément de couplage (42) et le second élément de couplage (43) dudit joint (40) et étant mobile en rotation autour d'un axe de rotation (B) du joint (40) par rapport au premier élément de couplage (42) et/ou au second élément de couplage (43) dudit joint (40), et
dans lequel ledit joint (40) est configuré de telle sorte qu'une rotation dudit insert de régulation (44) autour de l'axe de rotation (B) du joint (40) par rapport au premier élément de couplage (42) et/ou au second élément de couplage (43) détermine une variation simultanée de la hauteur de la partie de préhension (22a) de la poignée d'entraînement (20) par rapport au plan de support (SP),
**caractérisé en ce que** ledit insert de régulation (44) a une forme de coin en section transversale.

2. Dispositif (1) selon la revendication 1, dans lequel la première extrémité du premier élément (21) de ladite poignée d'entraînement (20) est contrainte au niveau de la partie arrière (11) du dispositif mobile (1), et dans lequel ledit second élément de couplage (43) est contraint axialement au premier élément de couplage (42) du premier élément (21) de la poignée d'entraînement (20).

3. Dispositif (1) selon l'une quelconque des revendications précédentes, dans lequel ledit axe de rotation (B) du joint (40) est transversal au plan de support (SP) et dans lequel ledit axe de rotation (B) du joint (40) est parallèle ou situé sur un plan XZ passant par l'axe longitudinal (X) et l'axe vertical (Z).

4. Dispositif (1) selon l'une quelconque des revendications précédentes, dans lequel le second élément (22) de la poignée d'entraînement (20) peut être positionné au moins dans :
- une position abaissée dans laquelle la partie de préhension (22a) de la poignée d'entraînement (20) a une première distance par rapport au plan de support (SP) du dispositif mobile (1), et dans laquelle ledit insert de régulation (44) est positionné dans une première position angulaire ; et dans
- une position relevée dans laquelle la partie de préhension (22a) de la poignée d'entraînement (20) présente une seconde distance par rapport au plan de support (SP) du dispositif mobile (1), ladite seconde distance étant supérieure à la première distance, et dans laquelle ledit insert de régulation (44) est positionné dans une seconde position angulaire tournée angulairement, le long dudit axe de rotation (B) du joint (40), par rapport à ladite première position angulaire, d'un angle compris entre 170° et 190°,
dans lequel le second élément (22) de la poignée d'entraînement (20) varie, entre la position abaissée et la position relevée, d'une inclinaison de celui-ci par rapport au plan de support (SP) d'un angle compris entre 4° et 20°,ladite inclinaison par rapport au plan de support (SP) étant mesurée sur un plan passant par l'axe longitudinal (X) et l'axe vertical (Z) du dispositif mobile (1), et
dans lequel une rotation dudit insert de régulation (44) autour de l'axe de rotation (B) du joint (40) détermine une rotation simultanée du second élément (22) de la poignée d'entraînement (20) autour d'un axe virtuel (C), ledit axe de rotation (B) du joint (40) étant orthogonal audit axe virtuel (C) du second élément (22) de la poignée (20).

5. Dispositif (1) selon la revendication 1, dans lequel ledit insert de régulation (44) s'étend radialement autour de l'axe de rotation (B) du joint (40) et s'étend en épaisseur entre un premier plan de butée (P1), configuré pour entrer en contact avec le premier élément de couplage (42) de la poignée d'entraînement (20), et un second plan de butée (P2), configuré pour entrer en contact avec le second élément de couplage (43) de la poignée d'entraînement (20),
ledit premier plan de butée (P1) et ledit second plan de butée (P2) déterminant une inclinaison relative entre le premier élément de couplage (42) et le second élément de couplage (43) pour définir ladite forme de coin et déterminant une inclinaison de l'axe de rotation (B) du joint (40) par rapport au plan de support (SP), ladite inclinaison étant projetée sur ledit plan XZ, lesdits premier et second plans de butée étant inclinés l'un par rapport à l'autre d'un angle α compris entre 4° et 20°,
dans lequel une rotation dudit insert de régulation (44) du joint (40) par rapport au premier élément de couplage (42) et/ou au second élément de couplage (43) dudit joint (40) détermine une variation simultanée de l'inclinaison de l'axe de rotation (B) du joint (40) par rapport au plan de support (SP), ladite variation d'inclinaison déterminant la variation de hauteur conséquente de la partie de préhension (22a) de la poignée d'entraînement (20),
dans lequel le premier plan de butée (P1) et le second plan de butée (P2) de l'insert de régulation (44) sont transversaux à l'axe vertical (Z), dans lequel le premier plan de butée (P1) et le second plan de butée (P2) de l'insert de régulation (44) sont tous deux orthogonaux à un plan XZ passant par l'axe longitudinal (X) et l'axe vertical (Z).

6. Dispositif (1) selon la revendication précédente, dans lequel :
- ledit insert de régulation (44) définit une plaque de régulation en forme de disque (44a) ayant une section transversale en forme de coin,
- ledit premier élément de couplage (42) définit une première plaque en forme de disque (42a), ladite première plaque en forme de disque (42a) ayant un premier plan de butée adapté pour entrer en contact avec le premier plan de butée de la plaque de régulation (44a),
- ledit second élément de couplage (43) définit une seconde plaque en forme de disque (43a), ladite seconde plaque en forme de disque (43a) ayant un second plan de butée adapté pour entrer en contact avec le second plan de butée de la plaque de régulation (44a),
dans lequel ledit premier plan de butée (P1) et ledit second plan de butée (P2) de la plaque de régulation (44a) sont inclinés l'un par rapport à l'autre dudit angle α et dans lequel le premier plan de butée de la première plaque (42a) et le second plan de butée de la seconde plaque (43a) sont inclinés l'un par rapport à l'autre dudit angle α.

7. Dispositif (1) selon la revendication précédente, dans lequel ledit joint (40) est configurable en :
- une condition de réglage, dans laquelle ladite plaque de régulation (44a) est mobile par rotation autour dudit axe de rotation (B) du joint (40) pour faire varier la hauteur de la partie de préhension (22a) de la poignée d'entraînement (20), et dans laquelle ledit joint (40) est configuré pour permettre une rotation du second élément (22) par rapport au premier élément (21) de la poignée d'entraînement (20) autour dudit axe de rotation (B), dans laquelle ladite seconde plaque (42a) est mobile par rotation autour dudit axe de rotation (B) par rapport à la première plaque (43a),
- une condition de verrouillage, dans laquelle une rotation relative entre la plaque de régulation (44a) et au moins l'une de la première plaque (42a) et de la seconde plaque (43a) de la poignée d'entraînement (20) est inhibée, ladite condition de verrouillage empêchant une variation de hauteur de la poignée (20) par rapport au plan de support (SP), et dans laquelle une rotation relative entre la première plaque (42a) et la seconde plaque (43a) de la poignée d'entraînement (20) est inhibée.

8. Dispositif (1) selon la revendication précédente, dans lequel ledit joint (40) comprend un système de fermeture configuré pour connecter la plaque de régulation (44a), la première plaque (42a) et la seconde plaque (43a) de la poignée d'entraînement (20) l'une à l'autre,
ledit système de fermeture étant en outre configuré pour définir ladite condition de verrouillage et ladite condition de réglage du joint (40),
ledit système de fermeture venant en butée, lors de la condition de verrouillage, ladite plaque de régulation (44a) entre la première plaque (42a) et la seconde plaque (43a) du joint (40) pour empêcher une rotation relative entre la première plaque (42a), la plaque de régulation (44a) et la seconde plaque (43a),
dans lequel ladite première plaque (42a), ladite seconde plaque (43a) et ladite plaque de régulation (44a) comprennent des trous centraux respectifs alignés les uns sur les autres, et
dans lequel ledit système de fermeture comprend :
- une broche (61) passant transversalement dans lesdits trous centraux respectifs à travers la première plaque (42a), la plaque de régulation (44a) et la seconde plaque (43a) ;
- un premier élément de butée (62) engagé à une première extrémité de ladite broche (61) et définissant une butée contre au moins l'une de la première plaque (42a) et de la seconde plaque (43a) ;
- un second élément de butée (63) engagé à une seconde extrémité de la broche (61) et mobile entre :
∘ une position fermée dans laquelle la première plaque (42a), la plaque de régulation (44a) et la seconde plaque (43a) sont en prise compressive de force l'une avec l'autre pour définir une contrainte axiale le long de l'axe de rotation (B) du joint (40),
dans lequel le premier élément de butée (62) est en butée forcée contre la première plaque (42a) ou la seconde plaque (43a), tandis qu'une partie dudit second élément de butée (63) est en butée forcée contre l'autre de la première plaque (42a) et de la seconde plaque (43a), ladite plaque de régulation (44a) étant pressée le long dudit axe de rotation (B) du joint (40) entre ladite première plaque (42a) et ladite seconde plaque (43a),
ladite position de fermeture définissant l'état de verrouillage du joint (40),
∘ une position d'ouverture dans laquelle la broche (61) permet un degré de liberté axiale, le long de l'axe de rotation (B), à au moins l'un de la première plaque (42a), de la seconde plaque (43a) et de la plaque de régulation (44a), ledit degré de liberté axiale permettant un degré de liberté en rotation de la plaque de régulation (44a),
ladite position d'ouverture définissant la condition de réglage du joint (40).

9. Dispositif (1) selon l'une quelconque des revendications 5 à 8, dans lequel ledit joint (40) comprend un élément de réglage élastique (45) interposé et agissant entre la plaque de régulation (44a) et au moins l'une de la première plaque (42a) et de la seconde plaque (43a) de la poignée d'entraînement (20), ledit élément de réglage élastique (45) étant configuré pour exercer une force de répulsion entre la plaque de régulation (44a) et ladite au moins une de la première plaque (42a) et de la seconde plaque (43a),
dans lequel, lorsque le joint (40) est dans l'état de réglage, ledit élément élastique écarte axialement la plaque de régulation (44a) d'au moins l'une de la première plaque (42a) et de la seconde plaque (43a) le long de l'axe de rotation (B) du joint (40), ledit écartement permettant un degré de liberté en rotation de la plaque de régulation (44a) par rapport à ladite première plaque (42a) et/ou par rapport à ladite seconde plaque (43a) pour déterminer le réglage en hauteur de la poignée d'entraînement (20).

10. Dispositif (1) selon l'une quelconque des revendications 6 à 9 ; dans lequel :
- ladite plaque de régulation (44a) comprend des dents (47) le long d'au moins l'un du premier plan de butée et du second plan de butée,
- ledit premier élément de couplage (42) et/ou ledit second élément de couplage (43) comprennent des dents respectives (48) configurées pour coopérer avec les dents (47) de l'insert de régulation (44) au moins dans l'état de verrouillage du joint (40),
lesdites dents respectives (47, 48) étant configurées pour empêcher, lorsqu'elles coopèrent les unes avec les autres, une rotation relative entre l'insert de régulation (44) et ledit premier élément de couplage (42) et ledit second élément de couplage (43) dans l'état verrouillé.

11. Dispositif (1) selon l'une quelconque des revendications précédentes, dans lequel ledit joint (40) est configuré pour permettre le déplacement du second élément (22) de ladite poignée d'entraînement (20), le long d'au moins un axe de commande (D), ledit axe de commande (D) comprenant au moins une composante axiale parallèle audit axe transversal (W),
ladite poignée d'entraînement (20) étant configurée pour tourner autour dudit axe de rotation (B) le long d'un plan de rotation orthogonal audit axe de rotation (B) et transversal au plan de support (SP), une telle rotation déterminant le déplacement de la poignée d'entraînement (20) le long dudit axe de commande (D) vers un côté gauche (12) et/ou vers un côté droit (13) du dispositif mobile (1).

12. Dispositif (1) selon l'une quelconque des revendications précédentes, dans lequel le cadre de support (2) porte en outre un corps de commande (5), ledit corps de commande (5) portant et/ou logeant ledit outil de travail (4) et définissant une zone de fonctionnement du dispositif mobile (1) configurée pour effectuer des opérations d'entretien,
dans lequel ledit corps de commande (5) est mobile, par rapport audit cadre de support (2), le long d'au moins un axe de travail parallèle ou coïncidant avec au moins l'un dans le groupe de l'axe transversal (W) et de l'axe vertical (Z),
ledit dispositif mobile (1) comprenant un système d'actionnement comprenant ledit joint (40) ou un levier de commande (90) et configuré pour déplacer le corps de commande (5) le long dudit au moins un axe de travail en réponse à un déplacement dudit système d'actionnement.

13. Dispositif (1) selon la revendication précédente lorsqu'elle dépend de la revendication 11, dans lequel le système d'actionnement est configuré pour convertir le déplacement de la poignée d'entraînement (20) le long de l'axe de commande (D) en un déplacement simultané du corps d'actionnement (5) le long dudit axe de travail.

14. Dispositif (1) selon la revendication précédente, dans lequel le corps de commande (5) est mobile :
- le long d'un axe de translation (Y) parallèle à l'axe transversal (W), et parallèle au plan de support (SP) et transversal à l'axe longitudinal (X),
et dans lequel le système d'actionnement est configuré pour convertir :
∘ un déplacement vers la droite de la poignée d'entraînement (20) le long de l'axe de commande (D) dans un déplacement simultané du corps de commande (5) vers la gauche le long de l'axe de translation (Y), et
∘ un déplacement vers la gauche de la poignée d'entraînement (20) le long de l'axe de commande (D) en un déplacement simultané du corps de commande (5) vers la droite le long de l'axe de translation (Y),
ou vice versa
et/ou
- le long dudit axe vertical (Z) pour faire varier une distance interposée entre l'outil de travail (4) et le plan de support (SP),
et dans lequel le système d'actionnement est configuré pour convertir :
∘ un déplacement vers la droite de la poignée d'entraînement (20) le long de l'axe de commande (D) dans une augmentation de la hauteur du corps d'actionnement (5) et donc dans une augmentation de la distance interposée entre l'outil de travail (4) et le plan de support (SP), et
∘ un déplacement vers la gauche de la poignée d'entraînement (20) le long de l'axe de commande (D) dans une réduction de la hauteur du corps de commande (5) et donc dans une réduction de la distance interposée entre l'outil de travail (4) et le plan de support (SP),
ou vice versa.

15. Dispositif (1) selon l'une quelconque des revendications précédentes, dans lequel le premier élément (21) de la poignée d'entraînement (20) comprend :
- une première partie de couplage (21a) configurée pour contraindre à l'arrière le dispositif mobile (1) et latéralement vers le côté droit (13) du dispositif mobile (1),
- une seconde partie de couplage (21b) configurée pour contraindre à l'arrière le dispositif mobile (1) et latéralement vers le côté gauche (12) du dispositif mobile (1), ladite seconde partie de couplage (21b) étant distincte et espacée le long de l'axe transversal (W) de la première partie de couplage (21a),
- une première section (21c) s'étendant entre la première partie de couplage (21a) et ledit joint (40),
- une seconde partie (21d) s'étendant entre la seconde partie de couplage (21b) et ledit joint (40), lesdites première et seconde sections (21d) de la poignée d'entraînement (20) convergeant centralement dans ledit joint unique (40) de la poignée d'entraînement (20),
dans lequel ledit joint (40) est interposé au centre entre lesdites première et seconde parties de couplage (21b) de la poignée d'entraînement (20) le long de l'axe transversal (W), selon une vue de l'arrière du dispositif mobile (1),
dans lequel lesdites première et seconde sections (21d) sont réunies pour définir un premier élément (21) de la poignée d'entraînement (20) en un seul corps, ledit corps unique comprenant ladite première partie de couplage (21a), ladite première section (21c), ladite seconde section (21d) et ladite seconde partie de couplage (21b), ledit corps unique ayant une forme en « U » arquée,
dans lequel ledit joint (40) est interposé au centre entre lesdites première et seconde parties de couplage (21b) de la poignée d'entraînement (20) le long de l'axe transversal (W),
le second élément (22) de la poignée (20) s'étendant latéralement et en hauteur à partir dudit joint (40) pour définir la partie de préhension (22a) de la poignée d'entraînement (20),
dans lequel ladite poignée d'entraînement (20) définit une forme inversée γ (gamma) ou une forme en X.
